# EUROPÄISCHE PATENTSCHRIFT

(11) **EP 2 888 060 B1**
(45) Veröffentlichungstag und Bekanntmachung des Hinweises auf die Patenterteilung: **31.05.2017**
(21) Anmeldenummer: 13750300.9
(22) Anmeldetag: 13.08.2013
(51) Int. Cl.: B07C 3/00, G06Q 10/08

(54) **VERFAHREN UND ANORDNUNG ZUM TRANSPORTIEREN VON QUADERFÖRMIGEN GEGENSTÄNDEN**
METHOD AND DEVICE FOR TRANSPORTING RECTANGULAR OBJECTS
PROCÉDÉ ET DISPOSITIF DE TRANSPORT DES OBJETS RECTANGULAIRES

(30) Priorität: 22.08.2012 DE 102012214946
(43) Veröffentlichungstag der Anmeldung: 01.07.2015
(73) Patentinhaber: Siemens Aktiengesellschaft, 80333 München (DE); Deutsche Post AG, 53113 Bonn (DE)
(72) Erfinder: HARTMANN, Bernd, 53501 Grafschaft-Leimersdorf (DE); MARSCHNER, Andreas, 53117 Bonn (DE); BERGER, Gisbert, 12487 Berlin (DE); ZETTLER, Michael, 78476 Allensbach (DE); SCHÖLLHORN, Thomas, 78479 Reichenau (DE); BREUER, Thomas, 78467 Konstanz (DE)
(86) Internationale Anmeldenummer: PCT/EP2013/066866
(87) Internationale Veröffentlichungsnummer: WO 2014/029660

(56) Entgegenhaltungen:
- DE-A1-102009 024 195
- FR-A1- 2 841 673

## Beschreibung

### GEBIET DER ERFINDUNG

Die Erfindung betrifft ein Verfahren und eine Anordnung zum Transportieren von mehreren quaderförmigen Gegenständen, beispielsweise von Postpaketen, zu vorgegebenen Zielpunkten.

### HINTERGRUND DER ERFINDUNG

Postpakete werden häufig in Fahrzeugen transportiert, beispielsweise für die Auslieferung der Postpakete an verschiedene Empfänger.

Postpakete können einem bestimmten Fahrzeug zum Beispiel an einer Sortieranlage oder in einem Zwischenlager zugeordnet werden. Eine Person oder ein Automat belädt dann den Laderaum des Fahrzeugs mit den zugeordneten Postpaketen. In dem Laderaum kann beispielsweise eine Vielzahl von Stellplätzen vorhanden sein, auf die jeweils ein Postpaket gestellt werden kann. Die Stellplätze können auch zu einer Regalwand gehören, die außerhalb des Fahrzeugs beladen und dann in das Fahrzeug geschoben werden kann. Die Belegung kann beliebig erfolgen oder anhand eines Belegungsplans, der vorgibt, auf welchen Stellplatz ein Postpaket gestellt werden sollte.

Ein Auslieferungsfahrer fährt mit dem beladenen Fahrzeug nacheinander mehrere Zielpunkte entlang einer ihm vorgegebenen Route an. An jedem Zielpunkt ist dem Fahrzeug jeweils mindestens ein Postpaket zu entnehmen und nach Möglichkeit auszuliefern. Der Auslieferungsfahrer muss zu diesem Zweck an jedem Zielpunkt im Laderaum alle Postpakete finden, die an diesem Zielpunkt auszuliefern sind.

Jedes Postpaket ist beispielsweise vom Absender oder von einem Postpaket-Beförderer mit einer Kennzeichnung der postalischen Empfängeradresse versehen worden, und gewöhnlich ist die Kennzeichnung zumindest auch in einer von einem Menschen lesbaren Form vorhanden. Es ist jedoch möglich, dass Postpakete beim Beladen so im Lieferraum des Fahrzeugs abgelegt werden, dass die Kennzeichnung auf dem Postpaket in dieser Position nicht sichtbar ist. Das kann unter anderem aus Platzgründen erfolgen, da ein Postpaket möglicherweise nur mit einer bestimmten Orientierung in bestimmte Stellplätze passt. Der Auslieferungsfahrer muss das Postpaket also gegebenenfalls drehen, um eindeutig feststellen zu können, ob es an dem aktuellen Zielpunkt auszuliefern ist.

Ein ähnliches Problem kann an anderen Stellen auf dem Transportweg auftreten, an dem die Postpakete vorübergehend untergebracht werden. Ein ähnliches Problem kann auch mit beliebigen anderen quaderförmigen Gegenständen auftreten, auf denen entweder keine kennzeichnende Angabe aufgebrachte ist oder bei denen eine kennzeichnende Angabe nur auf einer eingeschränkten Anzahl von Seiten aufgebracht ist.

### ALLGEMEINE BESCHREIBUNG EINIGER BEISPIELHAFTER AUSFÜHRUNGSFORMEN DER ERFINDUNG

Eine der Aufgaben der Erfindung liegt darin, ein Verfahren zum Transportieren von mehreren quaderförmigen Gegenständen sowie eine Anordnung, eine Vorrichtung, ein Programm und ein Computerprogrammprodukt zum Steuern eines solchen Transportverfahrens bereitzustellen, wobei ein Gegenstand sich auffinden lässt, ohne den Gegenstand so drehen zu müssen, dass eine kennzeichnende Angabe zum Gegenstand sichtbar wird. Es versteht sich, dass quaderförmig hierbei nicht als ideal quaderförmig zu verstehen ist, sondern als im Wesentlichen quaderförmig.

Die Aufgabe wird durch ein Verfahren mit den Merkmalen des Anspruchs 1, eine Anordnung mit den Merkmalen des Anspruchs 14, eine Vorrichtung mit den Merkmalen des Anspruchs 17, ein Programm mit den Merkmalen des Anspruchs 18 und ein Computerprogrammprodukt mit den Merkmalen des Anspruchs 19 gelöst. Vorteilhafte Ausgestaltungen sind in den Unteransprüchen angegeben.

Ein beispielhaftes erfindungsgemäßes Verfahren zum Transportieren von mehreren quaderförmigen Gegenständen zu vorgegebenen Zielpunkten umfasst für mindestens einen zu transportierenden Gegenstand ein Erzeugen mindestens eines rechnerauswertbaren Abbilds von dem zu transportierenden Gegenstand, wobei dieses Abbild mindestens eine Oberfläche des Gegenstands zeigt. Durch automatische Bildauswertung dieses Abbilds wird für mindestens eines von mehreren vorgegebenen optisch erfassbaren Merkmalen ermittelt, welchen Wert dieses Merkmal für dieses Abbild vom Gegenstand annimmt. Der durch Bildauswertung des Abbilds vom Gegenstand erzeugte Identifizierungs-Merkmalswerte-Vektor wird automatisch mit abgespeicherten Registrierungs-Merkmalswerte-Vektoren verglichen, wobei diese abgespeicherten und zum Vergleich herangezogenen Registrierungs-Merkmalswerte-Vektoren zu Datensätzen von mehreren Gegenständen gehören, wobei ein Datensatz für einen jeweiligen Gegenstand sechs Registrierungs-Merkmalswerte-Vektoren umfasst und wobei jeder der sechs Registrierungs-Merkmalswerte-Vektoren für jeweils eine von sechs Oberflächen des Gegenstands einen Wert für jedes vorgegebene optisch erfassbare Merkmal angibt. Dann, wenn der Identifizierungs-Merkmalswerte-Vektor mit einem abgespeicherten Registrierungs-Merkmalswerte-Vektor hinreichend genau übereinstimmt, wird eine Nachricht generiert, wobei diese Nachricht eine Information über denjenigen Gegenstand umfasst, zu dem der Datensatz mit dem abgespeicherten und als übereinstimmend erkannten Registrierungs-Merkmalswerte-Vektor gehört, und wobei die Nachricht für den weiteren Transport dieses Gegenstandes verwendbar ist.

Eine beispielhafte erfindungsgemäße Anordnung zum Steuern eines Verfahrens zum Transportieren von mehreren quaderförmigen Gegenständen zu vorgegebenen Zielpunkten umfasst ein Bildaufnahmegerät, das ausgestaltet ist, von jedem zu transportierenden Gegenstand mindestens einmal mindestens ein rechnerauswertbares Abbild zu erzeugen. Die Anordnung umfasst ferner eine Identifizierungs-Bildauswerteeinheit, die dazu ausgestaltet ist, durch automatische Bildauswertung eines Abbilds von einem Gegenstand für mindestens eines von mehreren vorgegebenen optischen Merkmalen zu ermitteln, welchen Wert dieses Merkmal für dieses Abbild vom Gegenstand annimmt, und einen durch automatische Bildauswertung eines Abbilds von einem Gegenstand erzeugten Identifizierungs-Merkmalswerte-Vektor automatisch mit abgespeicherten Merkmalswerte-Vektoren zu vergleichen, wobei diese abgespeicherten und zum Vergleich herangezogenen Registrierungs-Merkmalswerte-Vektoren zu Datensätzen von Gegenständen gehören, wobei ein Datensatz für einen jeweiligen Gegenstand sechs Registrierungs-Merkmalswerte-Vektoren umfasst und wobei jeder der sechs Registrierungs-Merkmalswerte-Vektoren für jeweils eine von sechs Oberflächen des Gegenstands einen Wert für jedes vorgegebene optisch erfassbare Merkmal angibt. Die Anordnung umfasst ferner ein Nachrichten-Erzeugungs-Gerät, das dazu ausgestaltet ist, dann, wenn der Identifizierungs-Merkmalswerte-Vektor mit einem abgespeicherten Registrierungs-Merkmalswerte-Vektor hinreichend genau übereinstimmt, eine Nachricht zu generieren, die eine Information über denjenigen Gegenstand umfasst, zu dem der Datensatz mit den abgespeicherten und als übereinstimmend erkannten Registrierungs-Merkmalswerte-Vektor gehört.

Das mindestens eine rechnerauswertbare Abbild eines Gegenstands kann an einem beliebigen Ort erzeugt werden, an dem eine Nachricht mit Informationen über den Gegenstand für den weiteren Transport des Gegenstands von Nutzen sein kann, beispielsweise im Laderaum eines Auslieferungsfahrzeugs oder in einem Zwischenspeicher. Die zum Vergleich herangezogenen Registrierungs-Merkmalswerte-Vektoren könnten dann beispielsweise zu Datensätzen von mehreren Gegenständen gehören, welche in den Laderaum verbracht wurden, bzw. zu Datensätzen von mehreren Gegenständen, welche sich in dem Zwischenspeicher befinden.

In einem Ausführungsbeispiel werden mehrere quaderförmige Gegenstände transportiert. Für jeden Gegenstand ist jeweils ein Zielpunkt vorgegeben, an den dieser Gegenstand zu transportieren ist. Im Falle eines Postpakets als ein zu transportierender Gegenstand ist beispielsweise eine postalische Adresse als Zielpunkt vorgegeben. Jeder quaderförmige Gegenstand besitzt sechs rechteckige Oberflächen.

Für jeden zu transportierenden Gegenstand werden beispielsweise folgende Schritte durchgeführt:
- Der Gegenstand durchläuft einmal eine Bildaufnahmestation.
- Der Gegenstand wird anschließend in einen Laderaum eines Auslieferungsfahrzeugs verbracht.
- Der Gegenstand wird mithilfe des Auslieferungsfahrzeugs zu dem für diesen Gegenstand vorgegebenen Zielpunkt transportiert.

Als Ausführungsbeispiel wird weiterhin eine Anordnung bereitgestellt, die dazu ausgestaltet ist, ein Transport-Verfahren mit diesen Verfahrensschritten zu steuern.

In einem Ausführungsbeispiel werden mehrere optisch erfassbare Merkmale vorgegeben. Die Werte dieser Merkmale lassen sich durch automatische Bildauswertung berechnen.

Für jeden zu transportierenden Gegenstand werden in einem Ausführungsbeispiel weiterhin die folgenden Schritte durchgeführt:
- Die Bildaufnahmestation erzeugt von jeder Oberfläche des durchlaufenden quaderförmigen Gegenstands automatisch jeweils ein rechnerauswertbares Abbild. Insgesamt erzeugt die Bildaufnahmestation also sechs Abbilder von einem durchlaufenden Gegenstand.
- Eine Registrierungs-Bildauswerteeinheit ermittelt automatisch für jede Oberfläche des Gegenstands und für jedes vorgegebene optisch erfassbare Merkmal, welchen Wert dieses Merkmal für diese Oberfläche annimmt. Hierbei wertet die Registrierungs-Bildauswerteeinheit das Abbild von dieser Oberfläche des Gegenstands aus. Insgesamt werden hierdurch sechs Registrierungs-Merkmalswerte-Vektoren für die sechs Oberflächen des Gegenstands generiert.
- Für den Gegenstand wird ein Datensatz erzeugt und in einem Datenspeicher abgespeichert. Dieser Datensatz umfasst die sechs Registrierungs-Merkmalswerte-Vektoren.

Für mindestens einen zu transportierenden Gegenstand im Laderaum werden in einem Ausführungsbeispiel weiterhin die folgenden Schritte durchgeführt:
- Ein Bildaufnahmegerät erzeugt mindestens einmal mindestens ein rechnerauswertbares Abbild von dem zu transportierenden Gegenstand, während sich dieser Gegenstand im Laderaum befindet. Dieses Abbild zeigt mindestens eine Oberfläche des zu transportierenden Gegenstands.
- Eine Identifizierungs-Bildauswerteeinheit ermittelt für mindestens ein vorgegebenes optisch erfassbares Merkmal, welchen Wert dieses Merkmal für die im Abbild gezeigte Oberfläche des Gegenstands annimmt.
- Die Identifizierungs-Bildauswerteeinheit vergleicht den Identifizierungs-Merkmalswerte-Vektor für eine Oberfläche des Gegenstands automatisch mit abgespeicherten Registrierungs-Merkmalswerte-Vektoren. Jeder zum Vergleich herangezogene Registrierungs-Merkmalswerte-Vektor beschreibt eine Oberfläche eines Gegenstands im Laderaum und gehört daher zu einem abgespeicherten Datensatz eines Gegenstandes, welcher in den Laderaum verbracht wurde.
- Falls der Identifizierungs-Merkmalswerte-Vektor hinreichend genau mit einem abgespeicherten Registrierungs-Merkmalswerte-Vektor übereinstimmt, so wird eine Nachricht erzeugt. Diese automatisch erzeugte Nachricht umfasst eine Information über denjenigen Gegenstand, zu dem der Datensatz mit dem abgespeicherten und als übereinstimmend erkannten Registrierungs-Merkmalswerte-Vektor gehört.
- Diese Nachricht wird für den weiteren Transport desjenigen Gegenstands verwendet, von dem das Abbild mit dem hinreichend genau übereinstimmenden Identifizierungs-Merkmalswerte-Vektor stammt.

Gemäß einigen Ausführungsbeispielen kann der quaderförmige Gegenstand sich in einer beliebigen Orientierung im Laderaum befinden. Das Abbild vom Gegenstand im Laderaum braucht nicht notwendigerweise eine Kennzeichnung des Zielpunkts oder eine eindeutige Kennung des Gegenstands zu zeigen. Trotzdem lässt sich in diesen Ausführungsbeispielen die Nachricht über einen bestimmten Gegenstand generieren.

Nicht erforderlich ist es, einen Gegenstand im Laderaum in eine bestimmte Position zu bringen, um ein Abbild von diesem Gegenstand zu erzeugen. Weiterhin ist es nicht erforderlich, ein Abbild von einem Gegenstand im Laderaum dergestalt zu erzeugen, dass durch Auswertung des Abbilds für jedes vorgegebene optisch erfassbare Merkmal ermittelt werden kann, welchen Wert dieses Merkmal für die gezeigte Oberfläche annimmt.

In einer beispielhaften Ausgestaltung zeigt ein Abbild von der Bildaufnahmestation oder von dem Bildaufnahmegerät mehrere Oberflächen eines quaderförmigen Gegenstands oder mehrere quaderförmige Gegenstände. Mindestens in diesem Falle werden Kanten im Abbild entdeckt, und das Abbild wird aufgrund der entdeckten Kanten rechnerisch in Teil-Abbilder zerlegt. Jedes dergestalt erzeugte Teil-Abbild wird aufbereitet. Jedes aufbereitete Teil-Abbild zeigt eine rechteckige Oberfläche aus einer Betrachtungsrichtung, die senkrecht auf der Oberfläche steht. Dieses aufbereitete Teil-Abbild wird ausgewertet, um die Merkmalswerte für diese Oberfläche zu ermitteln.

In einer beispielhaften Ausgestaltung umfasst jeder Datensatz für einen zu transportierenden Gegenstand zusätzlich zu den sechs Registrierungs-Merkmalswerte-Vektoren eine Codierung eines Zielpunkts, an den dieser Gegenstand zu transportieren ist. Die generierte Nachricht für einen Gegenstand umfasst in einer beispielhaften Ausführungsform eine Kennzeichnung dieses Zielpunkts, z. B. in einer von einem Menschen erfassbaren Form. In einer anderen beispielhaften Ausgestaltung wird mindestens einmal die aktuelle Geoposition des Fahrzeugs gemessen. Der Zielpunkt, an den ein Gegenstand im Laderaum zu transportieren ist, wird mit dieser aktuellen Geoposition verglichen. Die generierte Nachricht umfasst die Information, ob der Zielpunkt des Gegenstands - bis auf eine vorgegebene Toleranz - mit der gemessenen Geoposition übereinstimmt.

In einer beispielhaften Ausgestaltung wird die Identifizierungs-Bildauswerteeinheit zusammen mit dem Bildaufnahmegerät an Bord des Auslieferungsfahrzeugs mitgeführt. Beispielsweise bilden die Identifizierungs-Bildauswerteeinheit und das Bildaufnahmegerät zwei Bestandteile eines mobilen Geräts, z. B. eines Smartphones. Diese Ausgestaltung spart die Notwendigkeit ein, Daten drahtlos zwischen dem Bildaufnahmegerät und der Identifizierungs-Bildauswerteeinheit hin und her übermitteln zu müssen. In einer anderen beispielhaften Ausgestaltung ist die Identifizierungs-Bildauswerteeinheit ein Bestandteil einer ortsfesten Einrichtung außerhalb des Auslieferungsfahrzeugs, z. B. Bestandteil eines Sortierzentrums zum Sortieren von zu transportierenden Gegenständen. Das Bildaufnahmegerät übermittelt drahtlos Abbilder von Gegenständen im Laderaum an diese ortsfeste Identifizierungs-Bildauswerteeinheit. Die Identifizierungs-Bildauswerteeinheit übermittelt Bildauswerteergebnisse zurück an das Bildaufnahmegerät an Bord des Auslieferungsfahrzeugs. Diese Ausgestaltung ermöglicht ein leichteres Bildaufnahmegerät. Außerdem werden Bildauswerteeinheiten eingespart, da dieselbe Identifizierungs-Bildauswerteeinheit drahtlos mit mehreren Bildaufnahmegeräten verbunden sein kann, auch mit mehreren Bildaufnahmegeräten an Bord von mehreren Auslieferungsfahrzeugen.

In einer beispielhaften Ausgestaltung werden die Gegenstände zunächst in einen Zwischenspeicher verbracht und dort in den Laderaum des Auslieferungsfahrzeugs verbracht - oder auf die Laderäume verschiedener Auslieferungsfahrzeuge verteilt. Diejenigen Schritte, die in Ausführungsbeispielen von dem Bildaufnahmegerät und / oder von der Identifizierungs-Bildauswerteeinheit durchgeführt werden, werden zusätzlich für mindestens einen Gegenstand im Zwischenspeicher durchgeführt - oder nur für mindestens einen Gegenstand im Zwischenspeicher und nicht für einen Gegenstand im Laderaum. Eine Nachricht für einen Gegenstand im Zwischenspeicher wird generiert und ausgegeben. Diese Nachricht wird dafür verwendet, um den Vorgang zu steuern, jeden zu transportierenden Gegenstand in einen Laderaum zu verbringen. Beispielsweise spezifiziert die ausgegebene Nachricht ein bestimmtes Auslieferungsfahrzeug oder einen Stellplatz im Laderaum eines Auslieferungsfahrzeugs.

In einem Ausführungsbeispiel umfassen die gespeicherten Registrierungs-Merkmalswerte-Vektoren nur Registrierungs-Merkmalswerte-Vektoren für Gegenstände, die planmäßig in ein Fahrzeug oder Zwischenlager verbracht wurden. Damit wird der erforderliche Speicherplatz minimiert. Das kann von besonderem Vorteil sein, wenn die Registrierungs-Merkmalswerte-Vektoren im Fahrzeug oder in einem mobilen, dem Fahrzeug zugeordneten Gerät gespeichert sind. An anderer Stelle, beispielsweise in einem zentralen Server, können gleichzeitig Registrierungs-Merkmalswerte-Vektoren für Gegenstände, die planmäßig in eine Vielzahl von Fahrzeugen zu verbringen sind, gespeichert sein. In einer weiteren beispielhaften Ausführungsform umfassen die gespeicherten Registrierungs-Merkmalswerte-Vektoren nur Registrierungs-Merkmalswerte-Vektoren für Gegenstände, die laut einer Nutzereingabe in ein Fahrzeug oder ein Zwischenlager verbracht wurden. Hier ergibt sich der gleiche Vorteil wie in der zuvor genannten Ausführungsform. Zusätzlich ist hier sichergestellt, dass Abweichungen von einem Plan berücksichtigt werden können. In einer weiteren beispielhaften Ausführungsform umfassen die gespeicherten Registrierungs-Merkmalswerte-Vektoren nur Registrierungs-Merkmalswerte-Vektoren für Gegenstände, die planmäßig auf einer von einem Fahrzeug abzufahrenden Route und auf mindestens einer benachbarten Route ausgeliefert werden sollen. Auch hier ergibt sich der Vorteil, dass ein erforderlicher Speicherplatz gering gehalten wird. Allerdings kann in diesem Fall auch ohne Nutzereingabe sichergestellt werden, dass mit hoher Wahrscheinlichkeit Registrierungs-Merkmalswerte-Vektoren für alle Gegenstände in dem Fahrzeug vorhanden sind, auch wenn sich in dem Fahrzeug ein Gegenstand befindet, der planmäßig mit einem anderen Fahrzeug, das eine Nebenroute abfährt, ausgeliefert werden sollte. In einer weiteren beispielhaften Ausführungsform werden die gespeicherten Registrierungs-Merkmalswerte-Vektoren jeweils um Registrierungs-Merkmalswerte-Vektoren für die Gegenstände reduziert, die basierend auf einer Nutzereingabe endgültig aus einem Fahrzeug oder einem Zwischenlager entfernt wurden. Hierdurch kann die Anzahl der durchzuführenden Vergleiche reduziert werden.

Eine mit einem Registrierungs-Merkmalswerte-Vektoren verknüpfte gespeicherte Angabe kann beispielsweise einmalig in einem Datensatz vorhanden sein, der alle gespeicherten Registrierungs-Merkmalswerte-Vektoren für einen Gegenstand enthält. Ein Registrierungs-Merkmalswerte-Vektoren kann mit einer gespeicherten Angabe oder mit einer Mehrzahl von gespeicherten Angaben verknüpft sein. Die Angaben können beispielsweise eine Zielinformation umfassen. Eine solche Zielinformation kann beispielsweise eine Adresse oder Koordinaten umfassen, oder eine Kennung, aus der sich mit Hilfe einer Datenbank eine bestimmte Adresse oder Koordinaten ermitteln lässt. Die Angaben können auch besondere Vorgaben für die Auslieferung eines Gegenstands umfassen. Sie können auch eine Identifizierung eines Fahrzeugs, eines Zwischenspeichers oder einer Route umfassen. Sie können auch einen Auslieferungsstatus eines Gegenstands umfassen. Sie können des Weiteren beliebige andere Angaben umfassen.

In einer weiteren beispielhaften Ausführungsform ist jeder gespeicherte Registrierungs-Merkmalswerte-Vektor mit einer gespeicherten Angabe verknüpft, in welchem Fahrzeug oder Zwischenlager sich ein zugehöriger Gegenstand planmäßig befindet, wobei für den Vergleich nur gespeicherte Registrierungs-Merkmalswerte-Vektoren für Gegenstände berücksichtigt werden, die sich planmäßig in dem Fahrzeug oder Zwischenlager befinden. Dies kann den Vorteil haben, dass auch dann, wenn Registrierungs-Merkmalswerte-Vektoren für in einer Vielzahl von Fahrzeugen zu transportierenden oder in einer Vielzahl von Zwischenspeichern zu lagernden Gegenstände gespeichert sind, das Vergleichen der Registrierungs-Merkmalswerte-Vektoren selber minimiert werden kann. In einer beispielhaften Ausführungsform ist jeder gespeicherter Registrierungs-Merkmalswerte-Vektor mit einer gespeicherten Angabe verknüpft, auf welcher Route der zugehörige Gegenstand planmäßig ausgeliefert werden soll, wobei für den Vergleich nur gespeicherte Registrierungs-Merkmalswerte-Vektoren für Gegenstände berücksichtigt werden, die planmäßig auf einer vorgegebenen Route oder auf einer benachbarten Route ausgeliefert werden sollen. Dies kann den Vorteil haben, dass die Anzahl der durchzuführenden Vergleiche der Registrierungs-Merkmalswerte-Vektoren gering gehalten werden kann, während gleichzeitig berücksichtigt werden kann, dass Gegenstände hin und wieder mit einem Ersatzfahrzeug oder mit anderen Fahrzeugen, die eine benachbarte Route abfahren, ausgeliefert werden. In einer beispielhaften Ausführungsform ist jeder gespeicherter Registrierungs-Merkmalswerte-Vektor mit einer gespeicherten Angabe verknüpfbar, dass der zugehörige Gegenstand endgültig aus einem Fahrzeug oder einem Zwischenlager entfernt wurde, wobei für den Vergleich nur gespeicherte Registrierungs-Merkmalswerte-Vektoren für Gegenstände berücksichtigt werden, die nicht mit einer solchen Angabe verknüpft sind. Hierdurch kann die Anzahl der durchzuführenden Vergleiche reduziert werden, indem die gespeicherten Registrierungs-Merkmalswerte-Vektoren, die mit einer entsprechenden Angabe verknüpft sind, ignoriert werden. In einer beispielhaften Ausführungsform ist jeder gespeicherter Registrierungs-Merkmalswerte-Vektor mit einer gespeicherten Angabe verknüpft, an welchem Zielort der zugehörige Gegenstand planmäßig ausgeliefert werden soll, wobei für den Vergleich nur gespeicherte Registrierungs-Merkmalswerte-Vektoren für Gegenstände berücksichtigt werden, die gemäß der gespeicherten Angabe in einem vorgegebenen Umkreis um eine aktuelle Position des Fahrzeugs und/oder um eine geplante Route des Fahrzeugs ausgeliefert werden sollen. Hierdurch kann die Anzahl der durchzuführenden Vergleiche ebenfalls reduziert werden.

Mit einer Reduzierung der Anzahl der durchzuführenden Vergleiche kann generell Prozessorleistung eingespart werden und/oder die Ausgabe eines Ergebnisses an einen Nutzer beschleunigt werden. Beides kann auch zu einer Reduktion der benötigten Energie führen.

Ein beispielhaftes erfindungsgemäßes Programm umfasst Programmanweisungen, wobei die Programmanweisungen eine Vorrichtung zur Ausführung eines Verfahrens veranlassen, wenn das Programm von dem Prozessor ausgeführt wird, wobei das Verfahren folgende Aktionen umfasst: Empfangen von Bilddaten mindestens eines erzeugten Abbilds eines quaderförmigen Gegenstands; Erstellen eines Identifizierungs-Merkmalswerte-Vektors aus mindestens einem Wert mindestens eines Merkmals anhand der Bilddaten, wobei das mindestens eine Merkmal eine optisch erfassbare Eigenschaft einer Oberfläche eines quaderförmigen Gegenstands repräsentiert; Vergleichen des erstellten Identifizierungs-Merkmalswerte-Vektors mit gespeicherten Registrierungs-Merkmalswerte-Vektoren, wobei Registrierungs-Merkmalswerte-Vektoren für eine Mehrzahl von quaderförmigen Gegenständen gespeichert sind und wobei für jeden quaderförmigen Gegenstand jeweils ein Registrierungs-Merkmalswerte-Vektoren für jede von sechs verschiedenen Oberflächen des quaderförmigen Gegenstands gespeichert ist; und, zumindest wenn in dem Vergleich ein gespeicherter Registrierungs-Merkmalswerte-Vektor mit einem vorgegebenen Maß an Übereinstimmung zu dem erstellten Identifizierungs-Merkmalswerte-Vektor gefunden wird, Veranlassen einer Ausgabe einer Nachricht, insbesondere an einen Nutzer, basierend auf einer mit dem gefundenen Registrierungs-Merkmalswerte-Vektor verknüpften, gespeicherten Angabe, wobei die Nachricht für den weiteren Transport des Gegenstandes verwendbar ist. Ein solches Verfahren könnte auch als eine beispielhafte Ausführungsform der Erfindung angesehen werden.

Ein Programm ist beispielsweise über ein Netz wie ein lokales Netz, ein Weitverkehrsnetz, ein virtuelles Netz, ein Funknetz, wie ein Mobilfunknetz, ein sonstiges Telefonnetz und/oder das Internet verteilbar. Ein Programm kann zumindest teilweise Software und/oder Firmware eines Prozessors sein. Zum Beispiel ist das erfindungsgemäß Programm in einem Speicher der erfindungsgemäßen Vorrichtung gespeichert. Es versteht sich, dass unter dem Begriff Programm jeweils auch eine Zusammenstellung mehrerer Programme verstanden werden kann.

Ein beispielhaftes erfindungsgemäßes Speichermedium speichert das erfindungsgemäße Programm. Das Speichermedium ist ein computerlesbares Speichermedium, welches das erfindungsgemäße Programm enthält und zum Beispiel als magnetisches, elektrisches, elektro-magnetisches, optisches und/oder andersartiges Speichermedium ausgebildet ist. Das Speichermedium kann insbesondere ein physikalisches und/oder gegenständliches Speichermedium sein. Das Speichermedium ist beispielsweise tragbar oder in einer Vorrichtung fest installiert. "Computerlesbar" soll insbesondere so verstanden werden, dass das Speichermedium von einem Computer bzw. einer Datenverarbeitungsvorrichtung (aus)gelesen und/oder beschrieben werden kann, beispielsweise von einem Prozessor. Das Speichermedium ist beispielsweise ein Programmspeicher eines Prozessors.

Eine beispielhafte erfindungsgemäße Vorrichtung umfasst zumindest einen Prozessor und zumindest einen Speicher, wobei in dem Speicher ein Programm gespeichert ist, und wobei der Speicher und das Programm eingerichtet sind, um, mit dem Prozessor, die Vorrichtung zumindest zu veranlassen, die oben im Zusammenhang mit dem Programm genannten Aktionen auszuführen, wenn das Programm auf dem Prozessor ausgeführt wird. Die Vorrichtung ist beispielsweise softwaremäßig eingerichtet, um die Aktionen ausführen zu können. Unter softwaremäßig eingerichtet soll dabei insbesondere die Vorbereitung der Vorrichtung verstanden werden, die notwendig ist, um ein Verfahren beispielsweise in Form eines Programms auf dem Prozessor ausführen zu können.

Unter einem Prozessor sollen unter anderem eine oder mehrere Kontrolleinheiten, Mikroprozessoren, Mikrokontrolleinheiten wie Mikrocontroller, digitale Signalprozessoren (DSP), Anwendungsspezifische Integrierte Schaltungen (ASIC) oder Field Programmable Gate Arrays (FPGA) verstanden werden.

Ein Speicher ist beispielsweise ein Programmspeicher und/oder ein Hauptspeicher des Prozessors. Unter einem Programmspeicher soll unter anderem ein nicht-flüchtiger Speicher und unter einem Hauptspeicher ein flüchtiger oder ein nicht-flüchtiger Speicher, insbesondere ein Speicher mit wahlfreiem Zugriff (RAM) und/oder ein Flash-Speicher, verstanden werden. Nicht-flüchtige Speicher sind z.B. Speicher mit wahlfreiem Zugriff (RAM) wie z.B. NOR-Flash-Speicher oder mit sequentiellem Zugriff wie z.B. NAND-Flash-Speicher und/oder Speicher mit Nur-Lese-Zugriff (ROM) wie z.B. EPROM-, EEPROM-, oder ROM-Speicher. Der Speicher kann beispielsweise gegenständlich ausgebildet sein.

Im Folgenden wird für ein Anwendungsbeispiel zunächst ein beispielhafter Ablauf beschrieben, den ein Auslieferungsfahrer eines Paket-Transporteurs teils selber durchführt, teils wahrnimmt.

Eine Vielzahl von Postpaketen wird auf einem Pufferspeicher eines Sortierzentrums oder einer Zustellbasis zwischengespeichert. Diese Pakete werden anschließend auf Auslieferungsfahrzeuge verteilt oder alle in dasselbe Auslieferungsfahrzeug verbracht. Ein Bildaufnahmegerät erzeugt jeweils ein Abbild von jedem Paket auf diesem Pufferspeicher. An einen Werker, der die Pakete in das Auslieferungsfahrzeug verbring, wird für jedes Paket jeweils eine Meldung ausgegeben, in welches Fahrzeug und u. U. auf welchen Stellplatz in diesem Fahrzeug dieses Paket zu verbringen ist.

Der Laderaum eines Auslieferungsfahrzeugs wird mit Postpaketen beladen. Jedes Paket ist dem jeweils vorgegebenen Empfänger zuzustellen und wurde vom Absender oder vom Paket-Transporteur mit einer Kennzeichnung der postalischen Empfängeradresse in einer von einem Menschen lesbaren Form versehen. Ein Werker belädt diesen Laderaum mit Paketen. Im Laderaum ist eine Vielzahl von Stellplätzen vorhanden. In einer beispielhaften Ausgestaltung besitzt jeder Stellplatz im Laderaum eine eindeutige Kennung, die diesen Stellplatz von allen anderen Stellplätzen in diesem Laderaum unterscheidet.

In einer beispielhaften Ausgestaltung wählt der Werker selber für das Paket einen geeigneten Stellplatz im Laderaum aus.

In einer anderen beispielhaften Ausgestaltung, die z. B. in WO 2010/142625 A1 beschrieben wird, wird einem Werker für jedes Paket jeweils ein Soll-Stellplatz im Laderaum vorgegeben. Der Werker kann das Paket aber auch auf einen anderen Stellplatz legen, z. B. weil der vorgegebene Soll-Stellplatz nicht verfügbar oder nicht für das Paket geeignet ist. Der Werker gibt z. B. per Spracheingabe ein, auf welchen Platz der Werker das Paket tatsächlich gelegt hat.

Ein Auslieferungsfahrer fährt mit dem Auslieferungsfahrzeug nacheinander mehrere Zielpunkte entlang einer ihm vorgegebenen Zustellroute an. An jedem Zielpunkt ist jeweils mindestens ein Paket dem Auslieferungsfahrzeug zu entnehmen und dem Empfänger zuzustellen. Der Auslieferungsfahrer muss im Laderaum alle Pakete an diesen Zielpunkt finden.

Die meisten Postpakete haben die Form eines Quaders. Möglich ist, dass ein Paket so im Fahrzeug liegt, dass die Adresse auf dem Paket in dieser Position nicht sichtbar ist. Trotzdem soll vermieden werden, dass der Auslieferungsfahrer Pakete anheben und drehen muss, um im Laderaum die Pakete für einen bestimmten Zielpunkt zu finden. Dieser Schritt des Drehens würde viel Zeit bei der Auslieferung kosten. Der Auslieferungsfahrer müsste oft dasselbe Paket mehrmals anheben und drehen, bis der Zielpunkt für dieses Paket erreicht ist.

An Bord des Fahrzeugs befindet sich ein mobiles Daten verarbeitendes Gerät mit einem Bildaufnahmegerät. Dieses mobile Gerät ist z. B. als Smartphone ausgestaltet.

In einer beispielhaften Ausgestaltung wird folgende Abfolge mindestens einmal durchgeführt:
- Der Fahrer erzeugt mit einem mobilen datenverarbeitenden Gerät, z. B. mit einem Smartphone, ein Abbild von einem Paket, das im Laderaum liegt. Dieses Abbild zeigt wenigstens teilweise wenigstens eine Oberfläche des Pakets und nicht notwendigerweise die postalische Empfängeradresse auf dem Paket.
- Das Gerät selber oder eine andere Bildauswerteeinheit wertet automatisch das Abbild aus und erzeugt eine Meldung an den Auslieferungsfahrer, z. B. eine der folgenden Meldungen: "Paket hier zustellen", oder "Aufnahme von einem anderen Paket erzeugen" oder "Zustellung an diesen Zielpunkt ist abgeschlossen".
- In einer alternativen beispielhaften Ausgestaltung gibt das Gerät eine Beschreibung des ermittelten Zielpunkts in einer von einem Menschen wahrnehmbaren Form aus, z. B. als eine alphanumerische Zeichenfolge oder indem der Zielpunkt auf einer Landkarte dargestellt wird oder per Sprachausgabe.

Diese Abfolge wird so oft wiederholt, bis der Auslieferungsfahrer alle Pakete an diesen Zielpunkt zugestellt hat - oder dies wenigstens versucht hat.

In einer anderen beispielhaften Ausgestaltung erzeugt das mobile Gerät Abbilder von Paketen im Laderaum ohne Zutun des Auslieferungsfahrers. Das mobile Gerät erzeugt automatisch, z. B. mit einer vorgegebenen Aufnahmefrequenz, Abbilder.

In einer beispielhaften Ausgestaltung ist das mobile Gerät in einer Halterung im Laderaum befestigt. In einer Fortbildung dieser Ausgestaltung sind mehrere mobile Geräte an verschiedenen Halterungen im Laderaum befestigt und erzeugen Abbilder in verschiedene Richtungen.

In einer anderen beispielhaften Ausgestaltung wird mindestens ein mobiles Gerät entlang einer Führungseinrichtung an den Paketen vorbei geführt. Das mobile Gerät wird z. B. einem Antrieb der Führungs-Einrichtung mit konstanter Geschwindigkeit gefördert. Ein mobiles Gerät in einer Halterung lässt sich in Kombination mit einem mobilen Gerät an einer Führungseinrichtung verwenden.

In einer beispielhaften Ausgestaltung gibt das mobile Gerät eine Kennzeichnung des Zielpunkts aus, an den ein bestimmtes Paket zuzustellen ist. Oder das mobile Gerät gibt die Kennzeichnungen aller Stellplätze aus, auf denen Pakete für den aktuellen Zielpunkt liegen. Oder das mobile Gerät steuert Meldeleuchten an diesen Stellplätzen an.

In einer beispielhaften Ausgestaltung entnimmt der Auslieferungsfahrer zunächst diejenigen Pakete aus dem Laderaum, von denen der Auslieferungsfahrer weiß, dass diese Pakete an den aktuellen Zielpunkt zuzustellen sind, z. B. weil der Auslieferungsfahrer die jeweilige Zielpunkt-Kennzeichnung lesen kann, ohne das Paket zu drehen. Die Abbilder vom mobilen Gerät werden verwendet, um weitere Pakete an diesen aktuellen Zielpunkt im Laderaum zu finden.
In einer beispielhaften Ausgestaltung bestätigt der Auslieferungsfahrer, dass er ein bestimmtes Paket aus dem Laderaum entnommen und dem Empfänger zugestellt hat. Falls der Auslieferungsfahrer das Paket nicht zustellen konnte, so verbringt der Auslieferungsfahrer das Paket zurück in den Laderaum.

Nunmehr wird für das Anwendungsbeispiel ein beispielhafter interner Ablauf beschrieben, den eine beispielhafte datenverarbeitende Anordnung zum Sortieren von Postpaketen durchführt.

Jedes zu transportierende Paket hat auf dem Weg vom Absender zum Empfänger mindestens einmal eine Paket-Sortieranlage ("hub") sowie anschließend eine Zustellbasis durchlaufen, bevor es das Auslieferungsfahrzeug erreicht.

Eine ortsfeste Bildaufnahmestation der Sortieranlage erzeugt von jeder Oberfläche des Pakets jeweils ein rechnerverfügbares Abbild. Beispielsweise erzeugt eine Anordnung mit vier Kameras vier Abbilder vom Paket, nämlich ein Abbild von oben, eine Abbild von unten und zwei Abbilder aus zwei verschiedenen seitlichen Betrachtungsrichtungen. Diese vier Abbilder werden rechnerisch aufbereitet. Im Falle eines quaderförmigen Pakets liefert diese Aufbereitung sechs Abbilder von den sechs Oberflächen des Quaders. Jedes aufbereitete Abbild zeigt eine rechteckige Oberfläche aus einer Betrachtungsrichtung, die senkrecht auf dieser Oberfläche steht.

Eines dieser sechs Abbilder zeigt eine Kennzeichnung des Zielpunkts in einer von einem Menschen lesbaren Form oder in maschinenlesbarer Form oder aber eine eindeutige Kennung für das Paket. Durch Bildauswertung, z. B. per OCR, wird die Zielpunkt-Kennzeichnung ermittelt, die im Abbild gezeigt wird. Falls im Abbild eine Kennung ("identifier") für das Paket gezeigt wird, so wird diese Kennung entziffert. Eine Datenbankabfrage liefert eine Codierung des Zielpunkts, die gemeinsam mit der Kennung in einem Datensatz abgespeichert wurde.

Für jede Oberfläche des Pakets wird jeweils ein Registrierungs-Fingerprint-Vektor generiert, wofür das Abbild von dieser Oberfläche ausgewertet wird und die Werte von unterschiedlichen vorgegebenen optisch erfassbaren Merkmalen gemessen werden. Dieser Registrierungs-Fingerprint-Vektor beschreibt diese Oberfläche des Pakets. Für ein quaderförmiges Paket werden dadurch sechs Registrierungs-Fingerprint-Vektoren generiert. Die Registrierungs-Fingerprint-Vektoren für ein Paket werden als Teil eines Datensatzes für dieses Paket in einem Datenspeicher abgespeichert. Dieser Datenspeicher gehört zu einer zentralen Datenbank und/oder zum mobilen datenverarbeitenden Gerät. Die Abbilder selber werden nicht notwendigerweise dauerhaft abgespeichert. Ein Registrierungs-Fingerprint für ein Abbild erfordert deutlich weniger Speicherplatz als das Abbild selber.

In EP 2371461 A1 wird beschrieben, wie für eine flache Postsendung ein Registrierungs-Merkmalswerte-Vektor generiert wird, der diejenige Oberfläche der Postsendung beschreibt, welche die Zustelladresse zeigt.

Ein vorgegebener Verteilplan legt fest, welche Pakete am aktuellen Tag (im laufenden "Produktionszyklus") mit welchem Auslieferungsfahrzeug zugestellt werden und daher in dieses Fahrzeug verbracht werden. Daher ist bekannt, welche Pakete sich zu Beginn einer Auslieferungsfahrt in einem bestimmten Auslieferungsfahrzeug befinden. Vorzugsweise wird eine Konsolidierung für die Registrierungs-Fingerprint-Vektoren aller Pakete in einem bestimmten Fahrzeug durchgeführt. Hierbei werden die Registrierungs-Fingerprint-Vektoren automatisch miteinander verglichen, und diejenigen Merkmale werden ermittelt, die zur Unterscheidung (Diskriminierung) der Pakete im Laderaum am besten geeignet sind. Hierbei wird eine Art Hauptkomponenten-Analyse durchgeführt.

In einer beispielhaften Ausgestaltung wird in einem zentralen Datenspeicher für jedes sortierte Paket jeweils ein Datensatz angelegt, während das Paket die Sortieranlage durchläuft. Dieser Datensatz umfasst die sechs Registrierungs-Merkmalswerte-Vektoren und zusätzlich eine Codierung des ermittelten Zielpunkts.

Die Datensätze für diejenigen Pakete, die mittels eines bestimmten Auslieferungsfahrzeugs ausgeliefert werden, werden in einer Ausgestaltung des Ausführungsbeispiels an das mobile Gerät übermittelt, welches beim Ausliefern mit diesem Auslieferungsfahrzeug mitgeführt wird. In einer Ausgestaltung werden zusätzlich die Datensätze für Pakete, die an Zustellpunkte entlang mindestens einer benachbarten Zustellroute zuzustellen sind, ebenfalls an das mobile Gerät übermittelt. Dadurch werden Pakete auch dann gefunden, wenn das tatsächliche Beladen und Zustellen der Pakete von einer geplanten Beladung und Zustellung abweicht.

Im Ausführungsbeispiel registriert das mobile Gerät, welche Pakete aus dem Laderaum entnommen wurden, z. B. aufgrund von entsprechenden Eingaben des Auslieferungsfahrers. Das mobile Gerät "weiß" daher zu jedem Zeitpunkt, welche Pakete sich aktuell noch im Laderaum befinden.

Das mobile Gerät - oder ein mit dem mobilen Gerät verbundenes Positionsmessgerät - misst die aktuelle Geoposition des Auslieferungsfahrzeugs. Diese aktuelle Geoposition wird mit Zielpunkten von Paketen im Laderaum verglichen. Dadurch wird automatisch festgestellt, wann das Auslieferungsfahrzeug einen Zielpunkt der Auslieferungsroute erreicht hat. Sobald das Auslieferungsfahrzeug einen Zielpunkt der Auslieferungsroute erreicht hat, ermittelt das mobile Gerät automatisch, welche Pakete im Laderaum an diesen Zielpunkt zuzustellen sind.

Wie oben dargelegt, erzeugt der Auslieferungsfahrer mit einem mobilen Gerät mindestens ein Abbild von einem Paket im Laderaum. Dieses Abbild zeigt mindestens eine Oberfläche des Pakets.

Das Bildaufnahmegerät des mobilen Geräts fokussiert automatisch auf ein gezeigtes Paket ("auto zooming"). Das mobile Gerät hat eine eigene Lichtquelle, um jedes Paket etwa gleich zu beleuchten. Vorzugsweise misst ein Sensor des mobilen Geräts die aktuellen Lichtverhältnisse im Laderaum. Die Lichtquelle ist so ausgestaltet, dass unerwünschte Reflexionen vermieden werden, und wird automatisch an die gemessenen Lichtverhältnisse adaptiert. Ein "shutter" des Bildaufnahmegeräts verhindert störenden Lichteinfall. Soweit möglich, wird rechnerisch eine Verwackelung herausgerechnet. Ist das Abbild nicht dafür geeignet, um aus diesem Abbild einen Identifizierungs-Fingerprint-Vektor zu berechnen, so wird an den Bearbeiter eine Meldung ausgegeben, ein weiteres Abbild von demselben Paket zu erzeugen.

In einer beispielhaften Ausgestaltung wird dieses Bildaufnahmegerät - oder ein anderes Bildaufnahmegerät - auch verwendet, um Abbilder von Paketen in einem Zwischenspeicher zu erzeugen. Diese Pakete werden vom Zwischenspeicher in mindestens ein Auslieferungsfahrzeug verbracht. Die Ergebnisse der Bildauswertung werden verwendet, um an einen Werker Meldungen auszugeben, welches Paket wo in welches Auslieferungsfahrzeug zu verladen ist.

Eine Identifizierungs-Bildauswerteeinheit wertet die Abbilder vom mobilen Gerät automatisch aus. In einer beispielhaften Ausgestaltung ist auch die Identifizierungs-Bildauswerteeinheit ein Bestandteil des mobilen Geräts und greift auf einen Datenspeicher des mobilen Geräts zu, indem die Abbilder - vorzugsweise die N zuletzt aufgenommenen Abbilder - abgespeichert werden.

In einer anderen beispielhaften Ausgestaltung ist die Identifizierungs-Bildauswerteeinheit räumlich getrennt vom mobilen Gerät mit dem Bildaufnahmegerät. Die Bildauswerteeinheit ist mit dem mobilen Gerät über eine Drahtlos-Schnittstelle (Luft-Schnittstelle) verbunden. Das mobile Gerät übermittelt an die Bildauswerteeinheit die Abbilder von den Paketen. Die Bildauswerteeinheit übermittelt Auswertungsergebnisse und / oder Nachrichten zurück an das mobile Gerät. Die Bildauswerteeinheit befindet sich entweder ebenfalls an Bord des Auslieferungsfahrzeugs, z. B. in einer Halterung im Armaturenbrett, oder außerhalb des Auslieferungsfahrzeugs, z. B. in einem Sortierzentrum mit einer Paket-Sortieranlage. Dieselbe ortsfeste Identifizierungs-Bildauswerteeinheit vermag Nachrichten mit mehreren mobilen Geräten an Bord von verschiedenen Auslieferungsfahrzeugen auszutauschen.

In der Regel zeigt das Abbild vom Paket im Laderaum mindestens zwei Oberflächen des Pakets. Aus diesem einen Abbild wird in diesem Fall rechnerisch jeweils ein Abbild jeder gezeigten Oberfläche generiert. Hierbei werden die im ursprünglichen Abbild gezeigten Kanten automatisch entdeckt, und die entdeckten Kanten werden benutzt, um das Abbild in Teil-Abbilder für jeweils eine Oberfläche zu zerlegen. Jedes Teil-Abbild für eine Oberfläche wird rechnerisch gedreht und entzerrt, um ein aufbereitetes Abbild zu generieren, welches die Oberfläche aus einer senkrechten Betrachtungsrichtung zeigt.

In einer beispielhaften Ausgestaltung zeigt ein Abbild mehrere Pakete. Dieser Fall tritt insbesondere dann auf, wenn das Bildaufnahmegerät in einer Halterung hängt oder das Bildaufnahmegerät an den Pakete vorbei transportiert wird und automatisch, z. B. mit fester Frequenz, Aufnahmen erzeugt. In diesem Falle wird das Abbild zunächst rechnerisch in Bestandteile zerlegt, sodass jeder Bestandteil jeweils nur ein Paket zeigt. Anschließend wird jeder Bestandteil rechnerisch in Teil-Abbilder für jeweils eine Oberfläche eines Pakets zerlegt.

Möglich ist auch, dass dieselbe Oberfläche desselben Pakets in mehreren Abbildern gezeigt wird. In einer beispielhaften Ausgestaltung werden mehrere Identifizierungs-Merkmalswerte-Vektoren, die aus Abbildern generiert wurden, die unmittelbar hintereinander erzeugt wurden, paarweise miteinander verglichen. Aus diesem Abbild wird mindestens ein Identifizierungs-Fingerprint-Vektor generiert. Dieser eine Identifizierungs-Fingerprint-Vektor für ein zu identifizierendes Paket wird automatisch mit den jeweils sechs Registrierungs-Fingerprint-Vektoren einer bestimmten Menge von Paketen verglichen. Diese Paket-Menge ist die gesamte Menge oder eine Teilmenge aller Pakete, die sich aktuell noch im Laderaum des Auslieferungsfahrzeugs befinden. Falls das Abbild vom Paket im Laderaum mehrere Oberflächen des Pakets zeigt, so werden aus dem Abbild mehrere Identifizierungs-Fingerprint-Vektoren generiert, nämlich jeweils ein Vektor pro gezeigte Oberfläche des Pakets.

In EP 2371461 A1 wird beschrieben, wie für eine flache Postsendung ein Identifizierungs-Merkmalswerte-Vektor generiert wird, wofür ein Abbild einer Oberfläche von der Postsendung ausgewertet wird. Die Postsendung wird identifiziert, indem der Identifizierungs-Merkmalswerte-Vektor mit abgespeicherten Registrierungs-Merkmalswerte-Vektoren verglichen wird.
Ein Paket kann gezielt optisch verändert werden, nachdem die Registrierungs-Merkmalswerte-Vektoren für dieses Paket generiert wurden und bevor dieses Paket in den Laderaum des Auslieferungsfahrzeugs verbracht wird. Beispielsweise wird ein Etikett an einer bestimmten Stelle auf einer Oberfläche des Pakets aufgebracht. Um diese planvoll durchgeführte optische Veränderung zu berücksichtigen, werden der Registrierungs-Merkmalswerte-Vektor und / oder der betreffende Identifizierungs-Merkmalswerte-Vektor von der betroffenen Oberfläche rechnerisch verändert. Ein solches rechnerische Verfahren wird in EP 2371461 A1 beschrieben.

Der Suchraum mit den zum Vergleich herangezogenen Registrierungs-Fingerprint-Vektoren wird in einer beispielhaften Ausgestaltung wie folgt eingeschränkt:
- Der Zielpunkt, an den das gesuchte Paket zuzustellen ist, wird vorgegeben, z. B. indem ein Positions-Messgerät die aktuelle Position des Auslieferungsfahrzeugs misst und mit einer Soll-Auslieferungsroute vergleicht. Vorgegeben ist weiterhin, welche Pakete an welchen Zielpunkt zuzustellen sind.
- In der Ausgestaltung mit den vorgegebenen Bereichen im Laderaum liefert ein Beladeplan für den Laderaum den Bereich im Laderaum, in dem das Paket sich befindet (bzw. befinden soll).
- In einer Ausgestaltung bilden alle noch nicht zugestellten Pakete im Laderaum oder in diesem Bereich die Paket-Menge, in der gesucht wird.
- In einer anderen Ausgestaltung wird zusätzlich ein Soll-Beladeplan oder ein Ist-Beladeplan in rechnerauswertbarer Form verwendet, wie er z. B. in WO 2010/142625 A1 beschrieben wird. Dieser Beladeplan schränkt den Ort im Laderaum ein, an dem ein Paket sich befinden kann, und wird zur Suchraum-Einschränkung verwendet.

Jeder Fingerprint-Vektor besteht aus mehreren Merkmals-Werten. In einer beispielhaften Ausgestaltung werden folgende Merkmale verwendet:
- die beiden Abmessungen der wenigstens annähernd rechteckigen Oberfläche (Breite und Höhe),
- die Farbe oder der Grauwert des Hintergrund-Bereichs der Oberfläche,
- optisch erfassbare Merkmale auf der Oberfläche, z. B. die Position und / oder die Abmessungen oder die Kontur von Textblöcken, von Strichmustern ("bar codes"), von Markierungen oder auch von Flecken oder Verschmutzungen oder von Klebebänder oder von Paketbändern auf der Oberfläche,
- Abweichungen der tatsächlichen Kontur der Oberfläche von einer idealen Rechteckkontur,
- die Oberflächenstruktur und Textur dieser Oberfläche,
- das Reflexionsverhalten der Oberfläche.

Möglich ist, dass ein Identifizierungs-Fingerprint-Vektor weniger Merkmalswerte umfasst als der entsprechende Registrierungs-Fingerprint-Vektor für diese Oberfläche dieses Pakets.

In der Regel lässt ein Paket sich in beispielhaften Ausführungsformen auch dann identifizieren, wenn das Abbild vom Paket im Laderaum weder die Zustelladresse noch eine Kennung des Pakets zeigt. Manche Paket-Versender bringen auf jedes Paket jeweils eine Pappe auf, und die Zuschnitte und damit deren optisch erfassbare Formen dieser Pappen differieren von Paket zu Paket. Andere Paket-Versender sichern ihre Pakete mit Paketbändern und / oder Klebebändern, deren Position von Paket zu Paket variiert. Der Zuschnitt einer Pappe und die Position und Größe von Klebebändern und Paketbändern liefern optisch erfassbare und unterscheidende Merkmale.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren, zu entnehmen. Die Figuren sollen jedoch nur dem Zwecke der Verdeutlichung, nicht aber zur Bestimmung des Schutzbereiches der Erfindung dienen. Die Figuren sind nicht maßstabsgetreu und sollen lediglich das allgemeine Konzept der vorliegenden Erfindung beispielhaft widerspiegeln. Insbesondere sollen Merkmale, die in den Figuren enthalten sind, keineswegs als zwingend notwendiger Bestandteil der vorliegenden Erfindung erachtet werden.

### KURZE BESCHREIBUNG DER ZEICHNUNGEN

In den Figuren zeigt:
- Fig. 1: ein Blockdiagramm einer beispielhaften Ausführungsform eines erfindungsgemäßen Systems;
- Fig. 2: ein Ablaufdiagramm, das eine erste beispielhafte Ausführungsform des erfindungsgemäßen Verfahrens illustriert;
- Fig. 3: ein Ablaufdiagramm, das eine zweite beispielhafte Ausführungsform des erfindungsgemäßen Verfahrens illustriert;
- Fig. 4: ein Blockdiagramm einer weiteren beispielhaften Ausführungsform eines erfindungsgemäßen Systems; und
- Fig. 5: ein Ablaufdiagramm, das eine dritte beispielhafte Ausführungsform des erfindungsgemäßen Verfahrens illustriert.

### DETAILLIERTE BESCHREIBUNG EINIGER BEISPIELHAFTER AUSFÜHRUNGSFORMEN DER ERFINDUNG

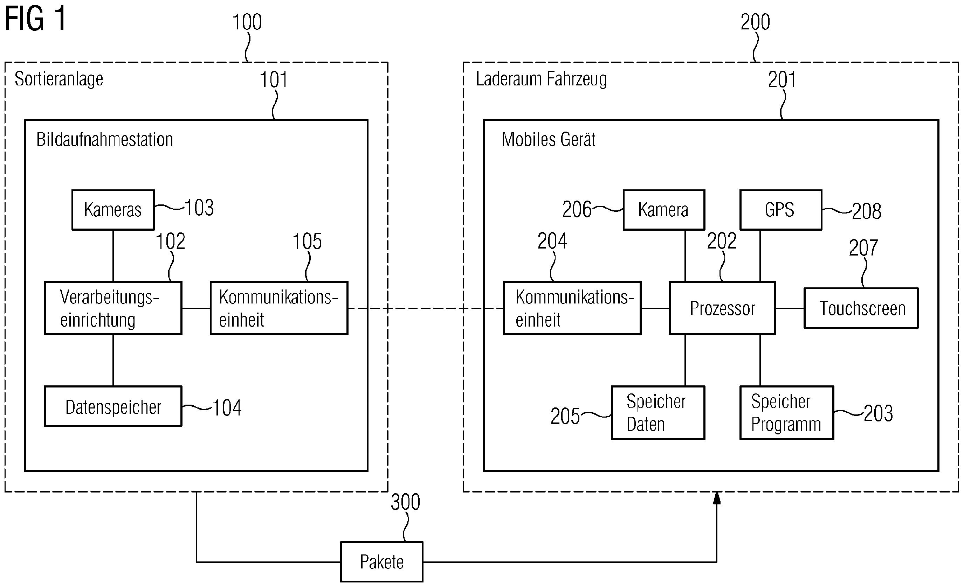

Figur 1 ist ein Blockdiagramm einer beispielhaften Ausführungsform eines erfindungsgemäßen Systems. Das System umfasst eine Sortieranlage 100 und ein mobiles Gerät 201.

Die Sortieranlage 100 umfasst eine Bildaufnahmestation 101. Die Bildaufnahmestation 101 umfasst eine Verarbeitungseinrichtung 102 und, verbunden mit der Verarbeitungseinrichtung 102, mehrere Kameras 103, einen Datenspeicher 104 und eine Kommunikationseinheit 105. Darüber hinaus kann die Sortieranlage 100 beliebige weitere Komponenten umfassen, insbesondere beliebige Komponenten für die eigentliche Beförderung und Sortierung von Postpaketen in der Sortieranlage, wie Förderbänder, Sortierer, Rutschen usw.

Die Kameras 103 sind so eingerichtet und angeordnet, dass sie die Sortieranlage 100 durchlaufende Pakete fotografieren und die erzeugten Bilddaten an die Verarbeitungseinrichtung 102 übermitteln können. Die Verarbeitungseinrichtung 102 fungiert als Registrierungs-Bildauswerteeinheit und kann einen Programmspeicher und einen Prozessor umfassen, wobei der Prozessor dazu eingerichtet sein kann, in dem Programmspeicher gespeicherte Programmanweisungen abzuarbeiten und damit die Bildaufnahmestation 101 zu veranlassen, gewünschte Aktionen durchzuführen. Alternativ könnte die Verarbeitungseinrichtung 102 einen Schaltkreis aufweisen, in dem entsprechende Funktionen hardwaremäßig implementiert sind. Eine Kombination beider Ansätze ist ebenso möglich. Die Verarbeitungseinrichtung 102 kann beispielsweise ein Server oder ein Teil eines Servers sein. Die Kommunikationseinheit 105 ermöglicht eine Kommunikation mit mobilen Geräten, beispielsweise über ein WLAN, über Bluetooth, über ein Mobilfunknetz oder über eine zeitweilige Kabelverbindung, die beispielsweise USB basiert sein kann. Eine Kommunikation kann auch über mehrere Systeme erfolgen. Beispielsweise könnte es die Kommunikationseinheit 105 einem mobilen Gerät erlauben, über ein Mobilfunknetz und das Internet auf die Verarbeitungseinrichtung 102 zuzugreifen. Der Datenspeicher 104 kann dazu eingerichtet sein, Daten in einer vorgegebenen Struktur zu speichern, beispielsweise in tabellarischer Form mit vorgegebenen Inhaltsarten. In dem präsentierten Ausführungsbeispiel ist die Verarbeitungseinrichtung 102 ein Teil der Bildaufnahmestation 101 und damit mit der Bildaufnahmestation 101 verbunden. Die Verarbeitungseinrichtung 102, der Datenspeicher 104 und die Kommukationseinheit 105 könnten auch außerhalb der Bildaufnahmestation 101 angeordnet und auf geeignete Weise direkt oder indirekt mit der Bildaufnahmestation 101 und insbesondere mit den Kameras 103 verbunden sein.

Das mobile Gerät 201 umfasst beispielhaft einen Prozessor 202 und, mit dem Prozessor 202 verbunden, einen Speicher 203. Der Speicher 203 ist oder beinhaltet ein Speichermedium, das Programmanweisungen umfassende Programme speichert. Der Prozessor 202 ist dazu eingerichtet, um Programme aus dem Speicher 203 auszuführen und damit das mobile Gerät 201 zu veranlassen, bestimmte Aktionen auszuführen. Der Prozessor könnte ein Mikroprozessor sein. Er könnte auch in einen integrierten Schaltkreis (IC) eingebettet sein, zum Beispiel zusammen mit einem Speicher, der zumindest das Programm enthält. In einer anderen beispielhaften Ausführungsform könnte das Gerät 201 anstelle eines Prozessors 202 und eines Speichers 203 einen Schaltkreis aufweisen, in dem entsprechende Funktionen hardwaremäßig implementiert sind. Der Prozessor 202 bildet zusammen mit dem Speicher 203 eine beispielhafte Identifizierungs-Bildauswerteeinheit sowie ein beispielhaftes Nachrichten-Erzeugungs-Gerät.

Das mobile Gerät 201 umfasst des Weiteren beispielhaft, jeweils mit dem Prozessor 202 verbunden, mindestens eine Kommunikationseinheit 204, einen weiteren Speicher 205, eine Kamera 206 als beispielhaftes Bildaufnahmegerät, ein Touchscreen 207, und einen GPS-Empfänger 208. Die mindestens eine Kommunikationseinheit 204 könnte einen WLAN-Transceiver und einen Mobilfunk-Transceiver umfassen. Alternativ oder zusätzlich könnte sie andere Sender-/Empfängereinheiten, wie einen Bluetooth Transceiver oder eine USB-Schnittstelle, umfassen. Der Speicher 205 kann dazu eingerichtet sein, Daten in einer vorgegebenen Struktur zu speichern, beispielsweise in tabellarischer Form mit vorgegebenen Inhaltsarten. Die Kamera 206 besitzt eine Autofokusfunktion. Außerdem sind ihr eine Lichtquelle und ein Umgebungslichtsensor zugeordnet. Beide Komponenten (nicht separat dargestellt) können unmittelbar zur Kamera 206 gehören, oder in dem mobilen Gerät 201 auch für andere Zwecke allgemein bereitgestellt sein. Alternativ oder zusätzlich zum Touchscreens 207 könnten auch andere Nutzerschnittstellen für eine Eingabe und für eine Ausgabe vorgesehen werden. Alternativ oder zusätzlich zum GPS-Empfänger 208 könnten auch Empfänger für andere Satellitennavigationssysteme vorgesehen werden.

Das mobile Gerät 201 kann optional beliebige andere Komponenten aufweisen, wie beispielsweise einen Scanner.

Das mobile Gerät 201 kann beispielsweise ein Smartphone sein, aber es könnte auch ein beliebiges anderes tragbares mobiles datenverarbeitendes Gerät sein, beispielsweise ein speziell für Paketauslieferungen bereitgestelltes Gerät.

Das mobile Gerät 201 kann einem bestimmten Auslieferungsfahrzeug zugeordnet sein. Bestimmte Pakete 300, die die Sortieranlage 100 verlassen, werden in einen Laderaum 200 des Fahrzeugs verbracht und dort auf einen jeweiligen Stellplatz einsortiert. Es versteht sich, dass die Stellplätze auch zu einem mobilen Regal gehören könnten, und dass die Pakete 300 dann auch außerhalb des Fahrzeugs auf Stellplätze des Regals gestellt werden könnten, und dass dann das beladene Regal in den Laderaum 200 geschoben werden könnte. Es wird davon ausgegangen, dass jedes zu transportierende Paket auf dem Weg vom Absender zum Empfänger mindestens einmal eine Sortieranlage entsprechend der Sortieranlage 100 durchläuft, bevor es das Auslieferungsfahrzeug erreicht.

In dem System gemäß Figur 1 kann in einer ersten Variante das System oder das Fahrzeug mit dem dargestellten Laderaum 200 oder das mobile Gerät 201 eine beispielhafte Ausführungsform einer erfindungsgemäßen Anordnung darstellen. In dem System aus Figur 1 kann in einer ersten Variante das mobile Gerät 201 oder eine den Prozessor 202 und den Speicher 203 umfassende Komponente eine beispielhafte Ausführungsform einer erfindungsgemäßen Vorrichtung darstellen.

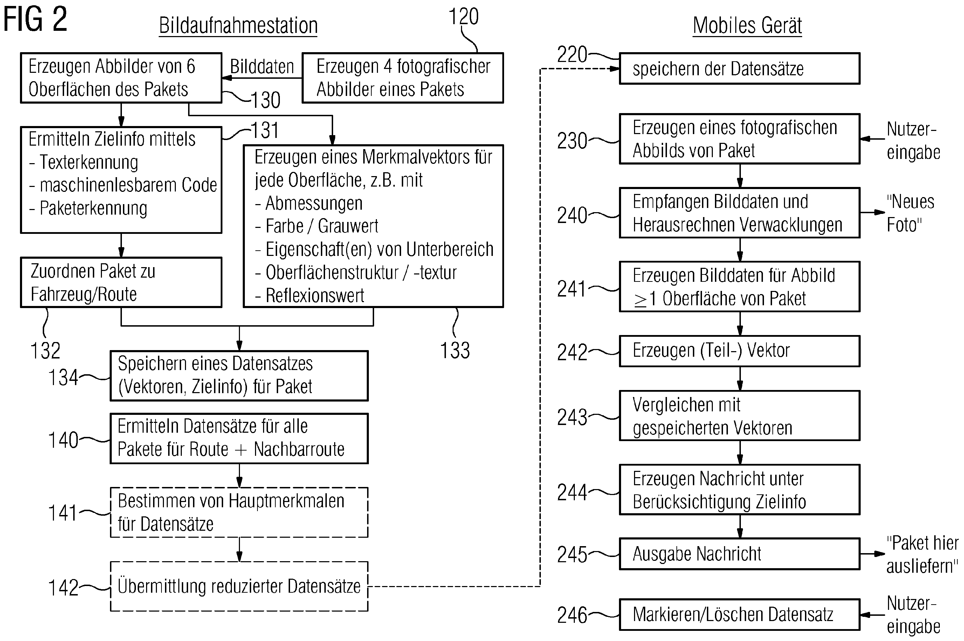

Figur 2 ist ein Ablaufdiagramm, das für diese Variante ein erstes beispielhaftes, erfindungsgemäßes Verfahren in dem System aus Figur 1 illustriert. Auf der linken Seite sind Aktionen an der Bildaufnahmestation 101 dargestellt und auf der rechten Seite sind Aktionen am mobilen Gerät 201 dargestellt.

Die Kameras 103 der Bildaufnahmestation 101 erzeugen digitale und damit rechnerverfügbare Abbilder von jedem Paket, das die Sortieranlage 100 durchläuft. (Aktion 120) Die Kameras 103 erstellen dabei eine ausreichende Anzahl von Abbildern eines Pakets aus geeigneten Winkeln, die es erlauben, alle sechs Oberflächen des Pakets vollständig und deutlich zu erkennen. Beispielsweise kann eine Anordnung aus vier Kameras 103 vier Abbilder eines Pakets erzeugen, ein Abbild von oben, ein Abbild von unten und zwei Abbilder aus zwei verschiedenen seitlichen Richtungen. Die Erzeugung der Abbilder kann dabei automatisch erfolgen, beispielsweise unter Verwendung eines Sensors, der den Kameras 103 anzeigt, wenn sich ein durchlaufendes Paket an einer für eine jeweilige Aufnahme vorgesehenen Stelle befindet.

Die Bilddaten der digitalen Abbilder werden an die Verarbeitungseinrichtung 102 übermittelt. Die nachfolgenden Aktionen an der Bildaufnahmestation 101 werden von der Verarbeitungseinrichtung 102 durchgeführt oder veranlasst, beispielsweise indem entsprechende Programmanweisungen von einem Prozessor ausgeführt werden.

Die Verarbeitungseinrichtung 102 erzeugt aus den erhaltenen Bilddaten jeweils ein digitales Abbild von jeder der sechs Oberflächen des Pakets und damit eigene Bilddaten für jede der Oberflächen. (Aktion 130) Werden Bilddaten für die oben beschriebenen vier Abbilder des Pakets erhalten, so können jeweils aus einem seitlichen Abbild des Pakets durch Projektion Abbilder von zwei seitlichen Oberflächen erzeugt werden.

Dann wird zum einen ermittelt, welches der sechs Abbilder eine Kennzeichnung des Zielpunks des Pakets aufweist und anhand der Kennzeichnung eine Zielinformation erstellt. (Aktion 131) Die Kennzeichnung kann beispielsweise in einer von einem Menschen lesbaren Form vorhanden sein, also als ausgeschriebene Adresse oder Koordinaten. In diesem Fall kann eine Texterkennung (OCR - Optical Character Recognition) durchgeführt werden, um eine Angabe des Zielpunkts zu erhalten. Die Kennzeichnung kann zusätzlich oder alternativ in maschinenlesbarer Form vorhanden sein. Dies kann beispielsweise ein Barcode sein, der von einer Vorrichtung unmittelbar ausgewertet werden kann, um eine Angabe des Zielpunkts zu erhalten, oder eine eindeutigen Kennung für das Paket, die mittels einer Datenbankabfrage eine Angabe des Zielpunkts liefert. Die Zielinformation kann eine Angabe des Zielpunkts in Form einer Adresse oder von Koordinaten enthalten oder eine unmittelbare Ableitung einer solchen Angabe ermöglichen. Sie kann aber auch eine Codierung des Zielpunktes sein, die gegebenenfalls nur über einer Datenbankanfrage eine Angabe des Zielpunkts liefert.

Anhand des ermittelten Zielpunkts wird das Paket außerdem einer bestimmten Route zugeordnet und eine Identität der Route ermittelt. (Aktion 132) Alternativ könnte das Paket einem bestimmten Fahrzeug oder einem bestimmten mobilen Gerät zugeordnet und eine entsprechende Fahrzeug- oder Geräteidentität ermittelt werden. Die Nutzung der Route hat aber den Vorteil einer größeren Flexibilität. Beispielsweise kann im Falle eines defekten Fahrzeugs ohne Weiteres ein anderes Fahrzeug für die gleiche Route eingesetzt werden. Ferner können mobile Geräte flexibel für verschiedene Routen eingesetzt werden, ohne dass auf eine bestimmte Zuordnung geachtet werden müsste.

Zum anderen wird aus den sechs erzeugten Abbildern separat für jeweils eine der sechs Oberflächen ein Merkmalsvektor als Registrierungs-Merkmalswerte-Vektor erzeugt. (Aktion 133) Jeder Merkmalsvektor ist eine Zusammenstellung von Werten, die verschiedene optische Merkmale oder Eigenschaften einer Oberfläche numerisch angeben. Ein Merkmalsvektor kann auch als "Fingerprint"-Vektor bezeichnet werden, da er gleichsam als einzigartiger Fingerabdruck einer Oberfläche angesehen werden kann.

Mindestens ein Merkmal kann beispielsweise absolute oder relative Abmessungen der Oberfläche umfassen. Eine relative Abmessung kann dabei beispielsweise das Verhältnis von Länge zu Breite der Oberfläche sein. Mindestens ein Merkmal kann beispielsweise einen mittleren Farbwert oder einen mittleren Grauwert der gesamten Oberfläche und/oder eines Hintergrund-bereichs der Oberfläche umfassen. Mindestens ein Merkmal kann außerdem beispielsweise eine Oberflächenstruktur oder -textur repräsentieren. Mindestens ein Merkmal kann außerdem beispielsweise einen Reflexionswert für die Oberfläche angeben. Mindestens ein Merkmal kann außerdem eine Eigenschaft eines optisch hervorgehobenen Unterbereichs der Oberfläche angeben. Optisch hervorgehobene Unterbereiche können sich beispielsweise aus Textblöcken, Strichmustern, Markierungen, Flecken, Verschmutzungen, Klebebändern oder Paketbändern auf der Oberfläche ergeben. Eine Eigenschaft eines Unterbereichs kann die Position und/oder die Abmessungen und/oder die Kontur des Unterbereichs sein.

Die sechs Registrierungs-Merkmalswerte-Vektoren für ein Paket werden zusammen mit der in Aktion 131 ermittelten Zielinformation und der in Aktion 132 ermittelten Identität eines Fahrzeugs oder einer Route als Datensatz für das Paket in dem Datenspeicher 104 gespeichert. (Aktion 134) Sowohl die Zielinformation als auch die Identität stellen somit jeweils eine mit den Registrierungs-Merkmalswerte-Vektoren verknüpfte, gespeicherte Angabe dar. Die Bilddaten für die von den Kameras 103 gelieferten Abbilder des Pakets sowie die Bilddaten der in Aktion 130 erzeugten Abbilder der Oberflächen können, müssen aber nicht gespeichert werden.

Die Aktionen 120 und 130-134 werden für alle Pakete durchgeführt, die die Sortieranlage 100 durchlaufen.

Die in Aktion 131 ermittelte Zielinformation für alle Pakete könnte auch zur Generierung eines allgemeinen Verteilplans genutzt werden, der festlegt, welche Pakete am aktuellen Tag, bzw. im laufenden Produktionszyklus, mit welchem Auslieferungsfahrzeug zugestellt werden sollen. Um zu vermeiden, dass in Aktion 132 einem Fahrzeug zu viele Pakete zugeteilt werden, kann die Erstellung eines Verteilplans und Aktion 132 auch erst nach Verarbeitung der aktuell auszuliefernden Pakete basierend auf sämtlichen gespeicherten Datensätzen erfolgen. Die in Aktion 134 gespeicherten Datensätze können dann um eine Identität der nachträglich für ein Paket festgelegten Route oder des nachträglich festgelegten Fahrzeugs ergänzt werden.

Die Pakete, die die Sortieranlage 100 durchlaufen haben, werden in den Laderaum eines zugewiesenen Auslieferungsfahrzeugs verbracht. Im Laderaum ist eine Vielzahl von Stellplätzen vorhanden. Jedes Paket wird auf einem dieser Stellplätze untergebracht. Die Unterbringung kann nach Größe erfolgen, oder gemäß einem automatisch erstellten Belegungsplan, soweit die Pakete größenmäßig in die zugeordneten Stellplätze passen. Der Belegungsplan kann eine Einsortierung nach Zielorten vorsehen, und zusätzlich bereits andere Kriterien, wie näherungsweise erfasste Größen der Pakete, berücksichtigen.

Wenn alle Pakete für einen bestimmten Produktionszyklus die Sortieranlage 100 durchlaufen haben, so ermittelt die Verarbeitungseinrichtung 102 jeweils für eine Route alle Datensätze, die eine Identifizierung dieser Route beinhalten. Zusätzlich werden alle Datensätze, die eine Identifizierung einer Nachbarroute zu dieser Route beinhalten, ermittelt. (Aktion 140) Bei im Wesentlichen festgelegten Routen kann die Auswahl der Nachbarrouten beispielsweise anhand einer gespeicherten Vorgabe erfolgen.

Die ermittelten Datensätze für eine bestimmte Route und die Nachbarrouten könnten nun an ein mobiles Gerät 201 übermittelt werden. Die Registrierungs-Merkmalswerte-Vektoren in diesen Datensätzen benötigen bereits deutlich weniger Speicherplatz und Bandbreite für eine Übermittlung als die Bilddaten der Abbilder der Oberflächen.

Optional kann aber zunächst noch mittels einer Konsolidierung eine Reduzierung der Anzahl der Werte in den Registrierungs-Merkmalswerte-Vektoren durchgeführt werden. Hierzu werden alle Registrierungs-Merkmalswerte-Vektoren aus den ermittelten Datensätzen für eine bestimmte Route und für die Nachbarrouten miteinander verglichen. Basierend auf dem Vergleich werden diejenigen Merkmale der Registrierungs-Merkmalswerte-Vektoren als Hauptmerkmale ermittelt, die zur Unterscheidung der betroffenen Pakete am besten geeignet sind. (Aktion 141) Aus den zugehörigen Werten wird dann für jeden Registrierungs-Merkmalswerte-Vektor ein neuer, reduzierter Registrierungs-Merkmalswerte-Vektor erzeugt.

Die ermittelten Datensätze können dann mit den reduzierten Registrierungs-Merkmalswerte-Vektoren an ein mobiles Gerät 201 übermittelt werden. (Aktion 142) Die Übermittlung kann beispielsweise über ein WLAN der Sortieranlage 100 erfolgen.

Die Übermittlung von Datensätzen an ein mobiles Gerät 201 kann beispielsweise auf eine Anforderung durch das mobile Gerät 201 hin erfolgen, wobei das Gerät 201 eine Route identifizieren kann, auf der es eingesetzt werden soll. Die Identifizierung der Route kann als Parameter in dem mobilen Gerät 201 hinterlegt sein oder jeweils von einem Nutzer, der die Anforderung veranlasst, eingegeben werden.

Das mobile Gerät 201 empfängt die Datensätze und speichert sie in Speicher 205. (Aktion 220) Die Anforderung der Datensätze und das Speichern der Datensätze kann von dem Prozessor 202 unter Abarbeitung von entsprechenden Programmanweisungen in dem Speicher 203 veranlasst werden.

Ein Auslieferungsfahrer führt das mobile Gerät 201 mit sich und fährt mit dem Fahrzeug, in dem sich die Pakete befinden, die vorgesehene Route ab. Die Route muss nicht vollständig vorgegeben sein, sondern kann flexibel anhand der Zielinformationen zu den geladenen Paketen angepasst werden. Aus den Zielinformationen in den im mobilen Gerät 201 gespeicherten Datensätzen kann zu Beginn der Fahrt ein Tourenplan erstellt werden, der den genauen Routenverlauf angibt sowie die Stellen, an denen Pakete auszuliefern sind. Der Tourenplan kann alternativ auch bereits von der Bildaufnahmestation 101 ermittelt und an das mobile Gerät 201 mitgeschickt werden.

An den vorgesehenen Stellen hält der Auslieferungsfahrer an und begibt sich in den Laderaum 200. Im Laderaum 200 erstellt der Auslieferungsfahrer mit der Kamera 206 des mobilen Geräts 201 ein digitales Abbild von einem Paket. (Aktion 230) Das Abbild zeigt mindestes eine Oberfläche des Pakets. Die Kamera 206 fokussiert für die Aufnahme automatisch, und die Lichtquelle des mobilen Geräts 201 beleuchtet ein Paket während der Aufnahme jeweils etwa gleich. Der Umgebungslichtsensor misst hierzu die aktuellen Lichtverhältnisse im Laderaum 200, und die Lichtquelle passt die Beleuchtung automatisch an die gemessenen Lichtverhältnisse an. Hierdurch können auch unerwünschte Reflexionen minimiert werden. Ein "Shutter" des mobilen Geräts 201 verhindert zusätzlich störenden Lichteinfall.

Die nachfolgenden Aktionen im mobilen Gerät 201 werden wieder von dem Prozessor 202 durchgeführt oder veranlasst, indem er entsprechende Programmanweisungen aus dem Speicher 203 durchführt. Die Programmanweisungen können zu einem Programm zum Erkennen von Paketen gehören.

Der Prozessor 202 empfängt die Bilddaten des von der Kamera 206 aufgenommenen Abbilds und rechnet soweit möglich eine Verwacklung aus der Aufnahme heraus. (Aktion 240) Ist das Abbild dennoch nicht für die gewünschte Weiterverarbeitung geeignet, so wird an den Fahrer eine Meldung über den Touchscreen 207 ausgegeben, dass ein weiteres Foto von dem gleichen Paket aufgenommen werden soll. In dem Fall wird dann mit Aktion 230 fortgefahren.

Anderenfalls werden aus den Bilddaten des von der Kamera 206 erstellten Abbilds Bilddaten eines Abbilds mindestens einer Oberfläche von mindestens einem Pakets erzeugt. (Aktion 241) In der Regel zeigt ein mittels einer Kamera 206 aufgenommenes Abbild eines Pakets mindestens zwei Oberflächen des Pakets. Aus diesem einen Abbild des Pakets kann dann rechnerisch jeweils ein Abbild jeder gezeigten Oberfläche generiert. Hierbei werden die im ursprünglichen Abbild des Pakets gezeigten Kanten automatisch erkannt, und die erkannten Kanten werden verwendet, um das Abbild in separate Abbilder für jeweils eine Oberfläche zu zerlegen. Jedes Abbild für eine Oberfläche wird rechnerisch gedreht und entzerrt, um ein aufbereitetes Abbild der Oberfläche zu generieren, welches die Oberfläche aus einer orthogonalen Betrachtungsrichtung zeigt.

Aus dem Abbild für eine Oberfläche wird ein Merkmalsvektor als Identifizierungs-Merkmalswerte-Vektor generiert. (Aktion 242) Wenn Abbilder zu mehreren Oberflächen des gleichen Pakets erzeugt werden konnten, so kann für jede dieser Oberflächen ein Merkmalsvektor als Identifizierungs-Merkmalswerte-Vektor generiert werden. Wurden die Registrierungs-Merkmalswerte-Vektoren in den in Aktion 220 empfangenen und gespeicherten Datensätzen in Aktion 141 auf Hauptmerkmale reduziert, so müssen auch in Aktion 242 nur Identifizierungs-Merkmalswerte-Vektoren bestehend aus diesen Hauptmerkmalen generiert werden. Welches diese Hauptmerkmale sind, kann von anhand der in Speicher 205 gespeicherten Datensätze ermittelt werden.

Der mindestens eine erzeugte Identifizierungs-Merkmalswerte-Vektor wird dann mit den in Speicher 205 gespeicherten Registrierungs-Merkmalswerte-Vektoren verglichen. (Aktion 243) Der Vergleich kann dabei mit allen gespeicherten Registrierungs-Merkmalswerte-Vektoren erfolgen, oder mit einer Teilmenge der gespeicherten Registrierungs-Merkmalswerte-Vektoren. Beispielsweise könnten die Datensätzen zu Paketen, die bereits ausgeliefert wurden, entsprechend markiert werden. Die Registrierungs-Merkmalswerte-Vektoren aus diesen Datensätzen müssen dann für den Vergleich nicht mehr berücksichtigt werden.

Der Vergleich kann abgebrochen werden, sobald ein Registrierungs-Merkmalswerte-Vektor gefunden wurde, der mindestens eine vorgegebene Ähnlichkeit zu dem Identifizierungs-Merkmalswerte-Vektor aufweist. Die Ähnlichkeit kann dabei zum Beispiel durch die Summe oder den Mittelwert der Differenzen zwischen den Werten für das jeweils gleiche Merkmal gegeben sein. Die Differenzen für verschiedene Merkmale können dabei optional verschieden gewichtet werden. Die vorgegebene Ähnlichkeit kann dann beispielsweise gegeben sein, wenn diese Summe oder dieser Mittelwert einen vorgegeben Schwellenwert unterschreitet. Andere Kriterien sind aber ebenso möglich. So könnte eine Differenz zwischen Werten auch einzeln für jedes Merkmal berücksichtigt werden, und es könnten verschiedene Schwellenwerte für verschiedene Merkmale vorgegeben werden.

Alternativ könnte ein Vergleich des Identifizierungs-Merkmalswerte-Vektors stets mit sämtlichen relevanten Registrierungs-Merkmalswerte-Vektoren durchgeführt werden. Unter gegebenenfalls mehreren genügend ähnlichen Registrierungs-Merkmalswerte-Vektoren könnte dann der ähnlichste Registrierungs-Merkmalswerte-Vektor als übereinstimmend angesehen werden.

Weist ein Registrierungs-Merkmalswerte-Vektor ein ausreichendes Maß an Übereinstimmung mit dem Identifizierungs-Merkmalswerte-Vektor auf, so wird angenommen, dass der gespeicherte Datensatz mit diesem Registrierungs-Merkmalswerte-Vektor zu dem Paket im Laderaum 200 gehört, von dem der Auslieferungsfahrer mit der Kamera 206 ein digitales Abbild erstellt hat.

Wurden anhand des digitalen Abbilds des Pakets in Aktion 242 mehrere Identifizierungs-Merkmalswerte-Vektoren generiert, so könnte ein Datensatz nur dann als zu dem Paket gehörig angesehen werden, wenn es für jeden Identifizierungs-Merkmalswerte-Vektor einen ausreichend ähnlichen Registrierungs-Merkmalswerte-Vektor in diesem Datensatz gibt.

Da die erhaltenen und in Speicher 205 gespeicherten Datensätze nicht nur Datensätze für Pakete für die Route enthalten, die von dem Fahrzeug abzufahren ist, sondern auch Datensätze für Pakete, die planmäßig auf einer benachbarten Route ausgeliefert werden sollten, werden Pakete auch dann gefunden, wenn das tatsächliche Beladen und Ausliefern der Pakete von einem geplanten Beladen und Ausliefern abweicht.

In dem gefundenen Datensatz existiert eine Zielinformation als mit den enthaltenen Registrierungs-Merkmalswerte-Vektoren verknüpfte, gespeicherte Angabe. Basierend auf dieser Zielinformation wird eine Nachricht an den Auslieferungsfahrer erzeugt. (Aktion 244) Die Nachricht kann beispielsweise die Adresse enthalten, an der das fotografierte Paket ausgeliefert werden soll. Alternativ kann der Prozessor 202 von dem GPS-Empfänger 208 eine Angabe über die aktuelle Position des Fahrzeugs erhalten. Der Prozessor 202 kann unter Verwendung von entsprechenden Programmanweisungen dann auswerten, ob sich die Lieferadresse innerhalb eines kleinen, vorgegebenen Radius um die aktuelle Position herum befindet. Die Nachricht kann dann zusätzlich oder alternativ zu der Adresse die Angabe "Paket hier ausliefern" umfassen, wenn sich die Lieferadresse innerhalb des Radius befindet; bzw. "nächstes Paket fotografieren", wenn sich die Lieferadresse außerhalb des Radius befindet. Es versteht sich, dass diese Angaben nicht text-oder sprachbasiert sein müssen. Beispielsweise könnte die Nachricht ein grünes Signal vorsehen, wenn das Paket an der gegenwärtigen Position auszuliefern ist, und ein rotes Signal, wenn das Paket an der gegenwärtigen Position nicht auszuliefern ist. Die Nachricht könnte zusätzlich oder alternativ eine Karte vorsehen, in der aktuelle Position und Lieferadresse markiert sind.

Die erzeugte Nachricht wird dann ausgegeben. (Aktion 245) Die Ausgabe kann beispielsweise über den Touchscreen 207 erfolgen. Andere Ausgabeformen kommen aber ebenso in Betracht, zum Beispiel eine akustische Nachricht über einen Lautsprecher des mobilen Geräts 201.

Wenn die Nachricht nur die Adresse enthält, an der das Paket ausgeliefert werden soll, so muss der Auslieferungsfahrer selber bewerten, ob sich die Adresse in unmittelbarer Umgebung befindet und das fotografierte Paket ausgeliefert werden soll.

Erst wenn der Auslieferungsfahrer die direkte oder indirekte Information erhält, dass das fotografierte Paket an der aktuellen Position auszuliefern ist, entnimmt er das Paket dem Stellplatz. Mit sehr großer Wahrscheinlichkeit stellt er fest, dass es sich tatsächlich um ein Paket handelt, dass im unmittelbaren Umkreis der gegenwärtigen Position auszuliefern ist, und er versucht es auszuliefern.

War die Auslieferung erfolgreich, so kann er dies in das mobile Gerät 201 mittels des Touchscreens 207 eingeben. Der Prozessor 202 kann dann den entsprechenden Datensatz im Speicher 205 löschen oder markieren. (Aktion 246) Für nachfolgende Vergleiche gemäß Aktion 243 für andere Pakete braucht dieser Datensatz dann nicht mehr berücksichtigt zu werden. War die Auslieferung nicht erfolgreich, so legt der Auslieferungsfahrer das Paket zurück auf einen Stellplatz. Zusätzlich könnte der Auslieferungsfahrer einen Hinweis auf den Auslieferungsversuch in das mobile Gerät 201 mittels des Touchscreens 207 eingeben. Der Prozessor 202 kann dann den entsprechenden Datensatz im Speicher 205 gesondert markieren.

Die Aktionen 230 bis 246 werden wiederholt, bis alle an der aktuellen Position auszuliefernden Pakete ermittelt wurden. Es versteht sich, dass der Auslieferungsfahrer zunächst sämtliche auszuliefernden Pakete ermitteln kann (Aktion 230-245), bevor er die gefundenen Pakete ausliefert, um doppelte Wege zu sparen. Wenn alle an der aktuellen Position auszuliefernden Pakete ermittelt wurden, kann eine entsprechende Nachricht an den Auslieferungsfahrer ausgegeben werden, etwa "Zustellung an diesem Zielpunkt ist abgeschlossen". Danach werden die Aktionen 230 bis 246 an einer anderen Position wiederholt, bis die gesamte Route abgefahren ist.

Die mindestens eine in Aktion 230 erfasste Oberfläche braucht nicht notwendigerweise eine Kennzeichnung des Zielpunkts oder eine eindeutige Kennung des Pakets zu zeigen. Dennoch kann für den Auslieferungsfahrer eine Information über das Paket geliefert werden, ohne dass dieser das Paket drehen müsste, um eine kennzeichnende Angabe sichtbar zu machen. Hierdurch kann er viel Zeit bei der Auslieferung sparen.

In dem System aus Figur 1 kann in einer zweiten Variante die Verarbeitungseinrichtung 102 der Bildaufnahmestation 101 oder eine die Verarbeitungseinrichtung 102 umfassende Vorrichtung eine beispielhafte Ausführungsform einer erfindungsgemäßen Vorrichtung darstellen.

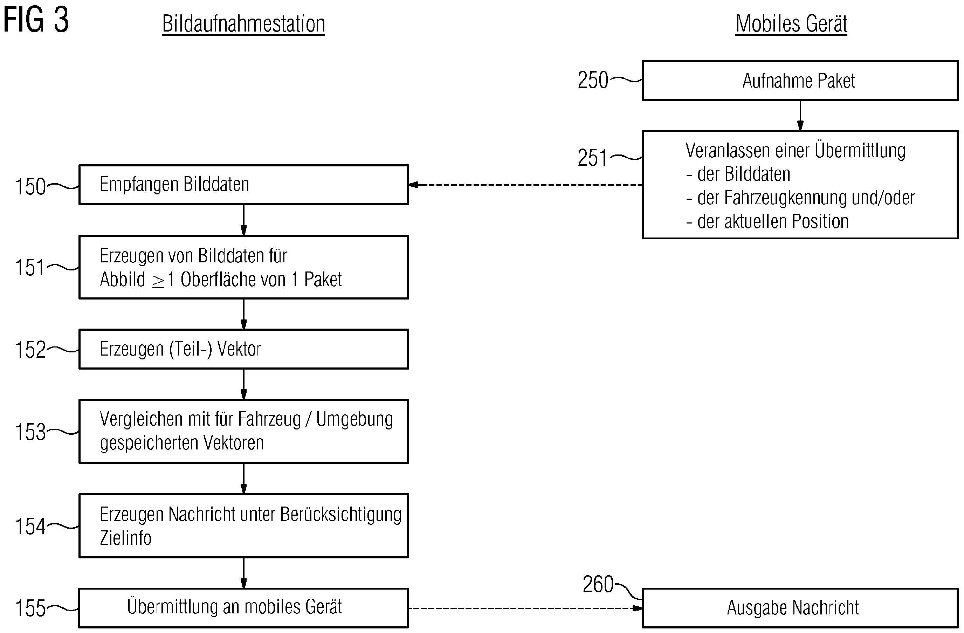

Figur 3 ist ein Ablaufdiagramm, das für diese zweite Variante ein zweites beispielhaftes, erfindungsgemäßes Verfahren in dem System aus Figur 1 illustriert. Auf der linken Seite sind Aktionen an der Bildaufnahmestation 101 dargestellt und auf der rechten Seite sind Aktionen am mobilen Gerät 201 dargestellt.

Die Bildaufnahmestation führt zunächst die mit Bezug auf Figur 2 beschriebenen Aktionen 120 bis 134 für alle Pakete eines Produktionszyklus durch. Im Unterschied zu dem Verfahren aus Figur 2 werden die erstellten Datensätze dann aber nicht an das mobile Gerät 201 übermittelt.

Das mobile Gerät 201 wird wiederum von einem Auslieferungsfahrer im Laderaum 200 des Fahrzeugs genutzt, um ein digitales Abbild eines Pakets auf einem Stellplatz aufzunehmen. (Aktion 250) Der Prozessor 202 veranlasst daraufhin unter Ausführung entsprechender Programmanweisungen aus Speicher 203 eine Übermittlung der Bilddaten des digitalen Abbilds, einer Kennung des Fahrzeugs oder einer für das Fahrzeug vorgesehenen Route und/oder eine Angabe einer von dem GPS-Empfänger 208 ermittelten aktuellen Position an die Bildaufnahmestation 101. (Aktion 251) Die Kennung kann in Speicher 205 gespeichert sein. Die Übermittlung kann im Rahmen einer Anforderung an die Bildaufnahmestation 101, eine Information über das aufgenommene Paket zu liefern, erfolgen. Die Übermittlung kann beispielsweise mittels der Kommunikationseinheit 204 über ein Mobilfunknetz in Kombination mit dem Internet erfolgen.

Die nachfolgenden Aktionen an der Bildaufnahmestation 101 werden von der Verarbeitungseinrichtung 102 durchgeführt oder veranlasst, beispielsweise indem entsprechende Programmanweisungen von einem Prozessor durchgeführt werden.

Die Bildaufnahmestation 101 empfängt die Bilddaten von dem mobilen Gerät 201 über die Kommunikationseinheit 105. (Aktion 150) Die Verarbeitungseinrichtung 102 kann dazu beispielsweise als über das Internet zugänglicher Server eingerichtet sein.

Basierend auf den empfangenen Bilddaten eines Abbilds eines Pakets erzeugt die Bildaufnahmestation 101 Bilddaten für ein jeweiliges Abbild mindestens einer Oberfläche des Pakets. (Aktion 151) Dies entspricht der von dem mobilen Gerät 201 durchgeführten Aktion 241 in dem Verfahren gemäß Figur 2.

Aus dem Abbild für mindestens eine Oberfläche wird ein jeweiliger Merkmalsvektor als Identifizierungs-Merkmalswerte-Vektor generiert. (Aktion 152) Dies entspricht der von dem mobilen Gerät 201 durchgeführten Aktion 242 in dem Verfahren gemäß Figur 2.

Die Bildaufnahmestation 101 vergleicht dann den Identifizierungs-Merkmalswerte-Vektor mit im Datenspeicher 104 gespeicherten Registrierungs-Merkmalswerte-Vektoren. (Aktion 153) Dies entspricht der von dem mobilen Gerät 201 durchgeführten Aktion 243 in dem Verfahren gemäß Figur 2.

Der Vergleich in Aktion 153 kann auf Registrierungs-Merkmalswerte-Vektoren in solchen Datensätze beschränkt werden, die eine Fahrzeug- oder Routenidentität beinhalten, die mit einer von dem mobilen Gerät 201 übermittelten Kennung des Fahrzeugs oder einer für das Fahrzeug vorgesehenen Route übereinstimmen oder - gegebenenfalls - die eine Fahrzeug- oder Routenidentität beinhalten, die einer Nachbarroute zugeordnet ist. Zusätzlich oder alternativ kann der Vergleich kann auf Registrierungs-Merkmalswerte-Vektoren in solchen Datensätze beschränkt werden, die eine Zielinformation beinhalten, die auf ein Ziel in einer unmittelbaren Umgebung einer von dem mobilen Gerät 201 übermittelten aktuellen Position des mobilen Geräts 201 hinweisen.

Wenn in Aktion 153 ein Registrierungs-Merkmalswerte-Vektor aufgefunden wird, der ein vorgegebenes Maß an Übereinstimmung mit dem generierten Identifizierungs-Merkmalswerte-Vektor aufweist, so erzeugt die Bildaufnahmestation 101 eine Nachricht unter Berücksichtigung der Zielinformation, die in dem gleichen Datensatz gespeichert ist wie der aufgefundene Registrierungs-Merkmalswerte-Vektor. (Aktion 154) Die Nachricht kann eine Adresse oder Koordinaten gemäß der Zielinformation beinhalten.

Falls die vom mobilen Gerät 201 in Aktion 150 erhaltenen Daten eine Angabe der aktuellen Position des mobilen Geräts 201 enthalten und die Position bei der Auswahl der zu vergleichenden Registrierungs-Merkmalswerte-Vektoren berücksichtigt wird, so kann die Nachricht bei einer in Aktion 153 gefundenen Übereinstimmung grundsätzlich zusätzlich oder alternativ einen Hinweis enthalten, dass das Paket, für das die Bilddaten empfangen wurden, an der aktuellen Position des mobilen Geräts 201 auszuliefern ist. Wenn in diesem Fall in Aktion 153 kein Registrierungs-Merkmalswerte-Vektor aufgefunden wird, der ein vorgegebenes Maß an Übereinstimmung mit dem generierten Identifizierungs-Merkmalswerte-Vektor aufweist, so kann die Nachricht einen Hinweis enthalten, dass das Paket, für das die Bilddaten empfangen wurden, nicht an der aktuellen Position des mobilen Geräts 201 auszuliefern ist. Wenn in diesem Fall in Aktion 153 erst gar kein Registrierungs-Merkmalswerte-Vektor für einen Vergleich in Frage kommt, so kann die Nachricht einen Hinweis enthalten, dass an der aktuellen Position des mobilen Geräts 201 überhaupt kein Paket im Auslieferungswagen auszuliefern ist.

Falls die vom mobilen Gerät 201 in Aktion 150 erhaltenen Daten eine Angabe der aktuellen Position des mobilen Geräts 201 enthalten, aber die Position bei der Auswahl der in Aktion 153 zu vergleichenden Registrierungs-Merkmalswerte-Vektoren nicht berücksichtigt wird, so kann bei einer gefundenen Übereinstimmung zusätzlich ermittelt werden, ob die Zielinformation auf ein Ziel hinweist, das sich in unmittelbarer Umgebung der angegebenen Position befindet. Ist dies der Fall, so kann die Nachricht zusätzlich oder alternativ einen Hinweis enthalten, dass das Paket, für das die Bilddaten empfangen wurden, an der aktuellen Position des mobilen Geräts 201 auszuliefern ist. Andernfalls kann die Nachricht zusätzlich oder alternativ einen Hinweis enthalten, dass das Paket, für das die Bilddaten empfangen wurden, nicht an der aktuellen Position des mobilen Geräts 201 auszuliefern ist.

Die erzeugte Nachricht wird an das mobile Gerät 201 übermittelt. (Aktion 155) Hierzu können die gleichen Kommunikationsmedien verwendet werden, wie für die Übermittlung der Bilddaten.

Das mobile Gerät 201 empfängt die Nachricht und gibt sie - nach einer eventuellen Aufbereitung - an den Auslieferungsfahrer aus. (Aktion 260) Die Ausgabe kann beispielsweise über den Touchscreen 207 erfolgen. Andere Ausgabeformen kommen aber ebenso in Betracht. Basierend auf der ausgegebenen Nachricht kann der Auslieferungsfahrer dann entscheiden, ob das Paket entnommen werden soll, oder ob eine Aufnahme von einem weiteren Paket gemacht werden soll.

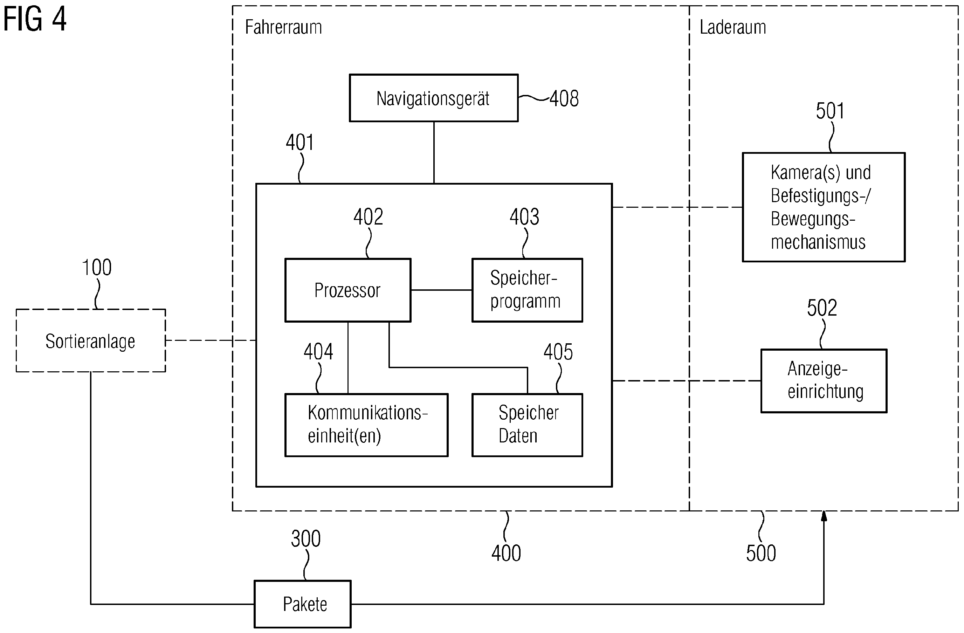

Figur 4 ist ein Blockdiagramm einer anderen beispielhaften Ausführungsform eines erfindungsgemäßen Systems. Das System umfasst eine Sortieranlage und ein Auslieferungsfahrzeug.

Die Sortieranlage kann der Sortieranlage 100 aus Figur 1 entsprechen und ist daher ebenfalls mit Bezugszeichen 100 versehen. Für die Details wird auf die Beschreibung der Sortieranlage 100 aus Figur 1 verwiesen.

Das Fahrzeug umfasst einen Fahrerraum 400 und einen Laderaum 500.

Der Fahrerraum 400 umfasst eine Vorrichtung 401, die beispielsweise im Armaturenbrett untergebracht sein kann oder in einer Halterung am Armaturenbrett eingesteckt werden kann. Die Vorrichtung 401 umfasst beispielhaft einen Prozessor 402 und, mit dem Prozessor 402 verbunden, einen Speicher 403. Der Speicher 403 ist oder beinhaltet ein Speichermedium, das Programmanweisungen umfassende Programme speichert. Der Prozessor 402 ist dazu eingerichtet, um Programme aus dem Speicher 403 auszuführen und damit die Vorrichtung 401 und verbundene Komponenten zu veranlassen, bestimmte Aktionen auszuführen. Die Programme umfassen ein Programm zum Erkennen von Paketen. In dem Speicher 403 können ferner weitere Programme oder auch Daten gespeichert werden. Der Prozessor könnte ein Mikroprozessor sein. Er könnte auch in einen integrierten Schaltkreis (IC) eingebettet sein, zum Beispiel zusammen mit einem Speicher, der zumindest das Programm enthält. In einer anderen beispielhaften Ausführungsform könnte die Vorrichtung 401 anstelle eines Prozessors 402 und eines Speichers 403 einen Schaltkreis aufweisen, in dem entsprechende Funktionen hardwaremäßig implementiert sind.

Die Vorrichtung 401 umfasst des Weiteren beispielhaft, jeweils mit dem Prozessor 402 verbunden, Kommunikationseinheiten 404 und einen weiteren Speicher 405. Die Kommunikationseinheiten 404 könnten einen WLAN-Transceiver und einen Bluetooth Transceiver umfassen. Der Speicher 405 kann dazu eingerichtet sein, Daten in einer vorgegebenen Struktur zu speichern, beispielsweise in tabellarischer Form mit vorgegebenen Inhaltsarten. Die Vorrichtung 401 kann optional beliebige andere Komponenten aufweisen, wie beispielsweise eine Nutzerschnittstelle für Ein- und/oder Ausgaben.

Der Fahrerraum 400 umfasst des Weiteren beispielhaft ein Navigationsgerät 408, das mit der Vorrichtung 401 verbunden ist. Das Navigationsgerät 408 kann beispielsweise einen GPS-Empfänger und/oder einen Empfänger für ein anderes Satellitennavigationssystem umfassen. Zusätzlich kann es beispielhaft fahrspezifische Informationen von dem Fahrzeug erhalten. Das Navigationsgerät 408 ist unter anderem dazu eingerichtet, um eine aktuelle Position des Fahrzeugs zu bestimmen. Zusätzlich kann es beispielsweise Navigationsinformationen für einen Fahrer ermitteln und bereitstellen.

Der Laderaum 500 des Fahrzeugs umfasst unterschiedlich große Stellplätze (nicht dargestellt), in die Pakete eingestellt werden können.

Der Laderaum 500 umfasst ferner mindestens eine Kamera 501. Ist eine Mehrzahl von Kameras 501 vorgesehen, so können diese mittels eines Befestigungsmechanismus fest installiert und starr so ausgerichtet sein, dass die Gesamtheit der Kameras 501 Abbilder von der Gesamtheit der Stellplätze erstellten kann. Ist nur eine Kamera 501 vorgesehen, so kann diese beispielsweise mittels eines Befestigungsmechanismus an einer Stelle fest montiert sein, aber mittels eines Bewegungsmechanismus so ausrichtbar sein, dass die Kamera 501 Abbilder von der Gesamtheit der Stellplätze erstellten kann. Der Bewegungsmechanismus kann dabei einen Motor umfassen. Ist nur eine Kamera 501 vorgesehen, so kann diese alternativ beispielsweise an einer Führungsschiene eines Befestigungsmechanismus angebracht sein und mittels eines Bewegungsmechanismus so entlang der Führungsschiene bewegt werden, dass die Kamera 501 Abbilder von der Gesamtheit der Stellplätze erstellten kann. Die Bewegung kann mit konstanter Geschwindigkeit erfolgen, wobei jeweils für eine Aufnahme optional eine Unterbrechung der Bewegung erfolgen kann. Es versteht sich, dass beliebige Kombinationen und Abwandlungen dieser drei beispielhaften Ausführungsformen möglich sind. Die zu bewirkende Änderungen der Ausrichtung oder die zu bewirkenden Bewegung entlang einer Führungsschiene können einem Antrieb eines Bewegungsmechanismus fest vorgegeben sein, so dass die jeweilige Bewegung automatisch durchgeführt wird. Die Kamera 501 kann dazu eingerichtet sein, Abbilder in dazu passenden Zeitabständen automatisch aufzunehmen. Alternativ können Motor und/oder Kamera(s) 501 mittels der Vorrichtung 401 ferngesteuert sein, sei es über eine kabelgebundene Verbindung oder über eine drahtlose Verbindung.

Der Laderaum 500 umfasst ferner eine Anzeigeeinrichtung 502. Diese kann in unterschiedlichster Weise ausgebildet sein. Es kann sich dabei beispielsweise um einen Bildschirm handeln, oder um Leuchtdioden (LEDs) an jedem Stellplatz, etc. Die Anzeigeeinrichtung 502 ist so eingerichtet, dass sie von der Vorrichtung 401 Befehle erhalten kann, sei es über eine kabelgebundene Verbindung oder über eine drahtlose Verbindung.

In einer Abwandlung könnten Kamera 501 und Anzeigeeinrichtung 502 wiederum Teil eines mobilen Gerätes sein, dass von einem Auslieferungsfahrer mit in den Laderaum 500 genommen werden kann. In dem Fall kann der Auslieferungsfahrer die Kamera 501 für das Erzeugen eines jeweiligen Abbilds eines Pakets nach Bedarf halten, und das mobile Gerät kann über eine drahtlose Verbindung, beispielsweise eine Bluetooth-Verbindung, mit der Vorrichtung 401 kommunizieren. Eine wie oben beschriebene, im Laderaum 500 angebrachte Führungsschiene kann aber auch so eingerichtet sein, dass sie eine Halterung oder eine Befestigungsmöglichkeit für eine Halterung für ein mobiles Gerät mit Kamera 501 aufweist.

Bestimmte Pakete 300, die die Sortieranlage 100 verlassen, werden in einen Laderaum 500 des Fahrzeugs verbracht und dort in einen jeweiligen Stellplatz einsortiert. Ein Auslieferungsfahrer fährt dann mit dem Fahrzeug eine vorgesehene Route ab.

In dem System gemäß Figur 4 stellt das System oder das Fahrzeug eine beispielhafte Ausgestaltung einer erfindungsgemäßen Anordnung dar. In dem System gemäß Figur 4 stellt das Fahrzeug oder die Vorrichtung 401 oder eine andere den Prozessor 402 und den Speicher 403 umfassende Einheit eine beispielhafte Ausgestaltung einer erfindungsgemäßen Vorrichtung dar.

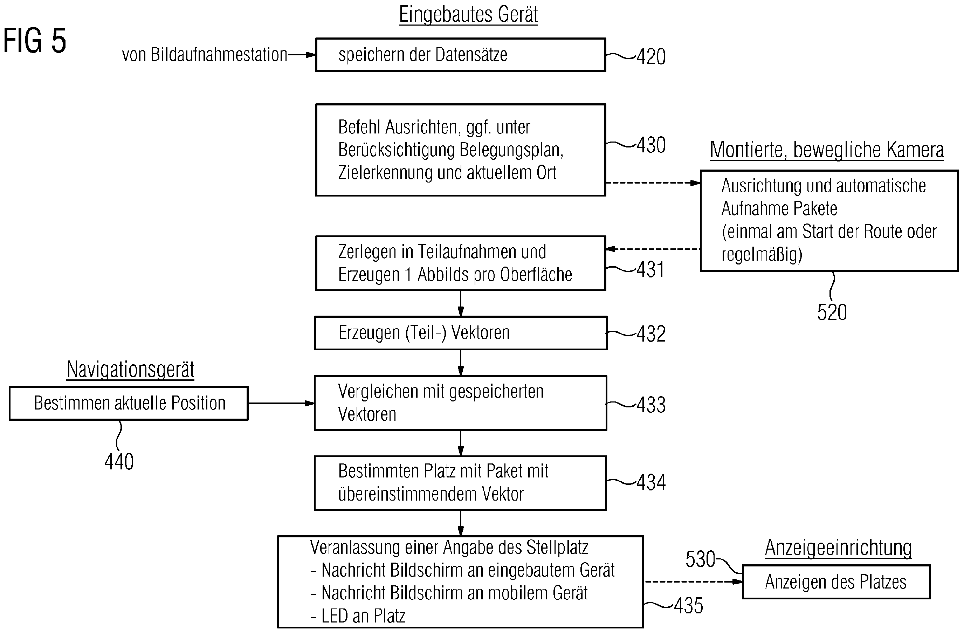

Figur 5 ist ein Ablaufdiagramm, das ein beispielhaftes, erfindungsgemäßes Verfahren in dem System aus Figur 4 illustriert. Die in der Mitte dargestellten Aktionen werden von dem Prozessor 402 veranlasst, wenn dieser Programmanweisungen aus dem Speicher 403 ausführt. Auf der linken Seite ist zusätzlich eine Aktion des Navigationsgeräts 408 dargestellt, und auf der rechten Seite Aktionen der Kamera 501 und der Anzeigeeinrichtung 502.

Die Bildaufnahmestation 101 der Sortieranlage 100 führt zunächst die mit Bezug auf Figur 2 beschriebenen Aktionen 120 bis 142 durch. Im Unterschied zu dem Verfahren aus Figur 2 werden die erstellten Datensätze aber nicht an das mobile Gerät 201 sondern an Vorrichtung 401 übermittelt. Die Übermittlung kann beispielsweise mittels WLAN erfolgen, wenn sich das Fahrzeug für die Beladung in der Nähe der Sortieranlage 100 oder in der Sortieranlage 100 befindet. Die Übermittlung kann beispielsweise automatisch erfolgen, da angenommen werden kann, dass sich alle Fahrzeuge, die für die aktuell anstehenden Auslieferungen vorgesehen sind, in der Nähe befinden. Sie kann aber auch auf eine Nutzereingabe an der Sortieranlage 100 oder an der Vorrichtung 401 hin erfolgen. Die Übermittlung kann vor, während oder nach der Beladung des Fahrzeugs mit den Paketen erfolgen.

Die Vorrichtung 401 empfängt die Datensätze und speichert sie im Speicher 405. (Aktion 420)

Ist eine Mehrzahl von starr angebrachten Kameras 501 vorgesehen, so erzeugt beispielsweise die Vorrichtung 401 Befehle an die Kameras 501 zum Erstellen von digitalen Abbildern. Ist mindestens eine bewegliche Kamera 501 vorgesehen, so erzeugt die Vorrichtung 401 Befehle an einen Motor zum Ausrichten und/oder Bewegen der Kamera 501 und Befehle an die Kamera 501 zum Erzeugen eines digitalen Abbilds an einer jeweiligen Position. (Aktion 430)

Die Aufnahmen können einmalig zu Beginn einer Auslieferungsroute erstellt werden oder wiederholt. Wiederholte Aufnahmen können in regelmäßigen Abständen mit einer vorgegebenen Frequenz erfolgen, oder an einem jeweiligen Haltepunkt auf der Route. Die Aufnahmen können von der Vorrichtung 401 automatisch veranlasst werden, oder in Reaktion auf eine Nutzereingabe. Für automatisch veranlasste, wiederholte Aufnahmen könnte die Vorrichtung 401 zum Beispiel auch eine von dem Navigationsgerät 408 erhaltene aktuelle Position mit den Zielinformationen in den gespeicherten Datensätzen vergleichen. Wenn eine Übereinstimmung gefunden wird, kann der Fahrer dann über einen (nicht dargestellten) Bildschirm oder Lautsprecher der Vorrichtung 401 aufgefordert werden so bald wie möglich anzuhalten. Sobald die Daten vom Navigationsgerät 408 darauf schließen lassen, dass das Fahrzeug zum Stehen gekommen ist, kann die Vorrichtung 401 dann die Aufnahmen durch die mindestens eine Kamera 501 veranlassen. Das kann den Effekt haben, dass Verwacklungen der Aufnahmen vermieden werden. Wiederholte Aufnahmen mit einer festen Frequenz könnten auch ohne Veranlassung durch die Vorrichtung 401 automatisch durchgeführt werden.

Die mindestens eine Kamera 501 erzeugt die Aufnahmen und sendet die Bilddaten der erzeugten Abbilder an die Vorrichtung 401. (Aktion 520)

Die Vorrichtung 401 empfängt die Bilddaten der Abbilder.

Ein jeweiliges Abbild, für das an der Vorrichtung 401 Bilddaten empfangen werden, kann mehrere Pakete zeigen. In diesem Fall kann das Abbild zunächst rechnerisch in Bestandteile zerlegt werden, sodass jeder Bestandteil jeweils nur ein Paket zeigt. Anschließend wird jeder Bestandteil rechnerisch in Teil-Abbilder für jeweils mindestens eine Oberfläche eines Pakets zerlegt. (Aktion 431) Letzteres entspricht der mit Verweis auf Figur 2 beschriebenen Aktion 241.

Für das Abbild jeder Oberfläche wird ein Merkmalsvektor als Identifizierungs-Merkmalswerte-Vektor generiert. (Aktion 432) Dies entspricht der mit Verweis auf Figur 2 beschriebenen Aktion 242. Die Identifizierungs-Merkmalswerte-Vektoren können wiederum Werte für alle ursprünglich in der Sortieranlage 100 für die Registrierungs-Merkmalswerte-Vektoren berücksichtigten Merkmale enthalten, oder nur für einen Teil dieser Merkmale.

Es ist auch möglich, dass dieselbe Oberfläche eines Pakets in mehreren Aufnahmen der mindestens einen Kamera 501 gezeigt wird, so dass in Aktion 432 mehrere Identifizierungs-Merkmalswerte-Vektoren für die gleiche Oberfläche eines Pakets erzeugt werden. In einer beispielhaften Ausgestaltung werden dann die Identifizierungs-Merkmalswerte-Vektoren, die aus Aufnahmen generiert wurden, die von der mindestens einen Kamera 501 gleichzeitig oder unmittelbar hintereinander erzeugt wurden, paarweise miteinander verglichen. Bei Übereinstimmung kann jeweils einer der Identifizierungs-Merkmalswerte-Vektoren gelöscht werden.

Anhand der bekannten Anbringung und/oder Ausrichtung der mindestens einen Kamera 501 bei der Erzeugung der Aufnahmen lässt sich jeder Identifizierungs-Merkmalswerte-Vektor einem bestimmten Stellplatz zuordnen. Die Zuordnung kann ebenfalls in Speicher 405 gespeichert werden.

Die Vorrichtung 401 vergleicht nun die erzeugten Identifizierungs-Merkmalswerte-Vektoren mit den in Speicher 405 zu einem jeweiligen Datensatz gespeicherten Registrierungs-Merkmalswerte-Vektoren. (Aktion 433) Dies entspricht der mit Verweis auf Figur 2 beschriebenen Aktion 243.

Wird der Vergleich gemäß einer ersten beispielhaften Option nur einmalig zu Beginn einer Route durchgeführt, so werden die Identifizierungs-Merkmalswerte-Vektoren mit allen Registrierungs-Merkmalswerte-Vektoren verglichen und die Ergebnisse werden in Speicher 405 gespeichert. Beispielsweise kann ein jeweiliger Datensatz für ein Paket in Speicher 405 ergänzt werden um die Angabe eines Stellplatzes. Der Stellplatz ist der Stellplatz, der dem Identifizierungs-Merkmalswerte-Vektor zugeordnet wurde, der mit einem der Registrierungs-Merkmalswerte-Vektoren in dem Datensatz in einem vorgegebenen Maß übereinstimmt. Alternativ können zu einem jeweiligen Datensatz Bilddaten zu einem Abbild einer Oberfläche gespeichert werden, basierend auf dem der Identifizierungs-Merkmalswerte-Vektor erzeugt wurde, der mit einem der Registrierungs-Merkmalswerte-Vektoren in dem Datensatz in einen vorgegebenen Maß übereinstimmt. Hält der Auslieferungsfahrer nun an der Route an, zum Beispiel aufgrund eines Tourenplans, so ermittelt die Vorrichtung 401 für die aktuelle, von dem Navigationsgerät 408 bereitgestellten Position, welche der gespeicherten Datensätze eine Zielinformation enthalten, die ein Lieferadresse in der unmittelbaren Umgebung angeben. Die Ermittlung kann beispielsweise auf Anforderung des Auslieferungsfahrers hin erfolgen. Für die gefundenen Datensätze werden dann die gespeicherten Stellplatzangaben und / oder die gespeicherten Bilddaten ausgelesen. (Aktion 434)

Die Vorrichtung 401 veranlasst dann einer Ausgabe einer entsprechenden Information an den Auslieferungsfahrer über die Anzeigeeinrichtung 502. (Aktion 435) Die Ausgabe der Information kann über einen Bildschirm einer im Laderaum 500 angebrachten Anzeigeeinrichtung 502 oder über einen Bildschirm eines vom Auslieferungsfahrer mitgeführten mobilen Geräts erfolgen. Die Ausgabe kann die Stellplätze identifizieren, in denen sich am aktuellen Ort auszuliefernde Pakete befinden, oder ein Abbild einer sichtbaren Oberfläche der Pakete darstellen. Wenn die Anzeigeeinrichtung 502 mindestens eine LED pro Stellplatz umfasst, die jeweils unmittelbar neben dem Stellplatz angeordnet ist, so könnte die Ausgabe der Information auch darin bestehen, dass die LEDs eingeschaltet werden, die Stellplätzen zugeordnet sind, in denen sich am aktuellen Ort auszuliefernde Pakete befinden. (Aktion 530) In einer alternativen Ausführungsform erfolgt die Ausgabe der Information über einen Bildschirm der Vorrichtung 401, wobei die Vorrichtung 401 in diesem Fall vorzugsweise in einer Halterung im Fahrerraum 400 angebracht ist, so dass der Auslieferungsfahrer die Vorrichtung 401 mit in den Laderaum 500 nehmen kann.

Wird der Vergleich der Identifizierungs-Merkmalswerte-Vektoren mit Registrierungs-Merkmalswerte-Vektoren in Aktion 433 dagegen nicht einmalig zu Beginn einer Route sondern gemäß einer zweiten beispielhaften Option wiederholt durchgeführt, so kann der Suchraum der zum Vergleich herangezogene Registrierungs-Merkmalswerte-Vektoren jeweils eingeschränkt werden.

Der Suchraum der zum Vergleich herangezogenen Registrierungs-Merkmalswerte-Vektoren kann auf die Registrierungs-Merkmalswerte-Vektoren eingeschränkt werden, die zu gespeicherten Datensätzen für noch nicht ausgelieferte Pakete gehören.

Zusätzlich oder alternativ können nur die Registrierungs-Merkmalswerte-Vektoren berücksichtigt werden, die zu einem jeweiligen Datensatz gehören, der eine Zielinformation umfasst, die auf eine Lieferadresse hinweist, die sich in unmittelbarer Umgebung zu einer von dem Navigationsgerät 408 angegebenen aktuellen Position befindet.

Zusätzlich oder alternativ kann der Suchraum der zum Vergleich herangezogenen Registrierungs-Merkmalswerte-Vektoren zielgerichtet für jeden Identifizierungs-Merkmalswerte-Vektoren anhand eines Belegungsplans eingeschränkt werden, denn der Belegungsplan schränkt den Ort im Laderaum ein, an dem sich ein Paket befinden sollte. Wenn beispielsweise für eine Aufnahme einer Kamera 501 bekannt ist, welche Stellplätze erfasst wurden, so können anhand des Belegungsplans die Datensätze für die Pakete herausgesucht werden, die sich planmäßig in einem dieser Stellplätze befinden sollten. Bei dem Belegungsplan kann es sich um einen Soll-Belegungsplan oder um einen Ist-Belegungsplan handeln. Die Erstellung eines Ist-Belegungsplan ausgehend von einem Soll-Belegungsplan wird beispielsweise in der Druckschrift WO 2010/142625 A1 beschrieben. Insbesondere bei einem Soll-Belegungsplan kann die Einschränkung des Suchraums für eine erste Sucherunde erfolgen. Wird in der ersten Suchrunde keine Übereinstimmung zwischen einem Identifizierungs-Merkmalswerte-Vektor und einem Registrierungs-Merkmalswerte-Vektor aus dem eingeschränkten Suchraum gefunden, so kann die Suche auf andere Registrierungs-Merkmalswerte-Vektoren ausgedehnt werden.

Auch in der zweiten Option können dann die Stellplätze bestimmt werden, die den Identifizierungs-Merkmalswerte-Vektoren entsprechen, für die ein übereinstimmender Registrierungs-Merkmalswerte-Vektor mit zugeordneter Zielinformation gefunden wurde, die auf eine Lieferadresse in der unmittelbaren Umgebung zur aktuellen Position hinweist. (Aktion 434) Oder es könnten wiederum Bilddaten für die Abbilder der Oberflächen bereitgestellt werden, anhand derer übereinstimmende Identifizierungs-Merkmalswerte-Vektoren für die aktuelle Position erzeugt wurden.

Für die zweite Option ist es jedoch nicht unbedingt erforderlich, eine Information über die Stellplätze und/oder Bilddaten mit einer Zuordnung zu Datensätzen zu speichern, da die Information unmittelbar für eine Nachricht an den Auslieferungsfahrer genutzt werden kann. Die Vorrichtung 401 veranlasst auch in diesem Fall das Ausgeben einer Information, die dem Auslieferungsfahrer anzeigt, von welchen Stellplätzen an der aktuellen Position Pakete für einen Auslieferungsversuch entnommen werden sollen. (Aktionen 435) Eine entsprechende Information wird von der Anzeigeeinrichtung 502 ausgegeben. (Aktion 530)

Der Auslieferungsfahrer kann wiederum nach erfolgreicher Auslieferung eines Pakets eine entsprechende Eingabe in die Vorrichtung 401 machen, so dass die Vorrichtung 401 den zugehörigen, gespeicherten Datensatz in Speicher 405 markieren und beim nächsten Vergleich ignorieren kann.

Wird der Vergleich der Identifizierungs-Merkmalswerte-Vektoren mit Registrierungs-Merkmalswerte-Vektoren in Aktion 433 gemäß der zweiten Option wiederholt durchgeführt, so kann dies den Effekt haben, dass eine Umsortierung der Pakete auf einer Route aus irgendeinem Grund mit berücksichtigt werden kann.

Sowohl in dem System gemäß Figur 1 wie auch in dem System gemäß Figur 4 könnte ein Paket gezielt optisch verändert werden, nachdem die Registrierungs-Merkmalswerte-Vektoren für dieses Paket generiert wurden und bevor dieses Paket in den Laderaum eines Auslieferungsfahrzeugs verbracht wurde. So kann beispielsweise ein Etikett an einer bestimmten Stelle auf einer Oberfläche des Pakets aufgebracht werden. Um eine solche planvoll durchgeführte optische Veränderung zu berücksichtigen, können die Registrierungs-Merkmalswerte-Vektoren und/oder die Identifizierungs-Merkmalswerte-Vektoren der betroffenen Oberfläche vor einem Vergleich rechnerisch verändert werden. Für beispielhafte Details zu einem solchen rechnerischen Verfahren wird auf die Druckschrift EP 2 371 461 A1 verwiesen.

Die dargestellten oder beschriebenen Verbindungen zwischen Komponenten sind als funktionale Verbindungen zu verstehen. Sie können direkt oder indirekt über mehrere andere Komponenten realisiert werden. Die Abfolge der geschilderten Aktionen in den einzelnen Ablaufdiagrammen ist nicht zwingend; alternative Abfolgen der Verfahrensschritte sind denkbar. Die Aktionen können auf verschiedene Art und Weise implementiert werden; so ist eine Implementierung nicht nur in Software (durch Programmanweisungen), sondern auch nur in Hardware oder in einer Kombination von beidem denkbar.

Es versteht sich, dass die beschriebenen Ausführungsformen lediglich Beispiele sind, die im Rahmen der Ansprüche auf vielfältige Weise modifiziert und/oder ergänzt werden können. Insbesondere kann jedes Merkmal, das für ein bestimmtes Ausführungsbeispiel beschrieben wurde, eigenständig oder in Kombination mit anderen Merkmalen in einem beliebigen anderen Ausführungsbeispiel genutzt werden. Jedes Merkmal, dass für ein Ausführungsbeispiel einer bestimmten Kategorie beschrieben wurde, kann auch in entsprechender Weise in einem Ausführungsbeispiel einer anderen Kategorie eingesetzt werden.

## Patentansprüche

1. Verfahren zum Transportieren von mehreren quaderförmigen Gegenständen zu vorgegebenen Zielpunkten, wobei für mindestens einen zu transportierenden Gegenstand
- mindestens ein rechnerauswertbares Abbild von dem zu transportierenden Gegenstand erzeugt wird, wobei dieses Abbild mindestens eine Oberfläche des Gegenstands zeigt,
- durch automatische Bildauswertung dieses Abbilds für mindestens eines von mehreren vorgegebenen optisch erfassbaren Merkmalen ermittelt wird, welchen Wert dieses Merkmal für dieses Abbild vom Gegenstand annimmt,
- der durch Bildauswertung des Abbilds vom Gegenstand erzeugte Identifizierungs-Merkmalswerte-Vektor automatisch mit abgespeicherten Registrierungs-Merkmalswerte-Vektoren verglichen wird, wobei diese abgespeicherten und zum Vergleich herangezogenen Registrierungs-Merkmalswerte-Vektoren zu Datensätzen von mehreren Gegenständen gehören, wobei ein Datensatz für einen jeweiligen Gegenstand sechs Registrierungs-Merkmalswerte-Vektoren umfasst und wobei jeder der sechs Registrierungs-Merkmalswerte-Vektoren für jeweils eine von sechs Oberflächen des Gegenstands einen Wert für jedes vorgegebene optisch erfassbare Merkmal angibt, und
- dann, wenn der Identifizierungs-Merkmalswerte-Vektor mit einem abgespeicherten Registrierungs-Merkmalswerte-Vektor hinreichend genau übereinstimmt, eine Nachricht generiert wird, wobei diese Nachricht eine Information über denjenigen Gegenstand umfasst, zu dem der Datensatz mit dem abgespeicherten und als übereinstimmend erkannten Registrierungs-Merkmalswerte-Vektor gehört, und wobei die Nachricht für den weiteren Transport dieses Gegenstandes verwendbar ist.

2. Verfahren nach Anspruch 1 ausgeführt in einem Laderaum eines Auslieferungsfahrzeugs, wobei die zum Vergleich herangezogenen Registrierungs-Merkmalswerte-Vektoren zu Datensätzen von mehreren Gegenständen gehören, welche in den Laderaum verbracht wurden, oder ausgeführt in einem Zwischenspeicher, wobei die zum Vergleich herangezogenen Registrierungs-Merkmalswerte-Vektoren zu Datensätzen von mehreren Gegenständen gehören, welche sich in dem Zwischenspeicher befinden.

3. Verfahren nach Anspruch 1 oder 2, **dadurch gekennzeichnet, dass** jeder zu transportierende Gegenstand während des Transports zuvor mindestens einmal eine Bildaufnahmestation durchläuft, wobei für jeden zu transportierenden Gegenstand die Schritte durchgeführt werden, dass
- die Bildaufnahmestation von jeder Oberfläche des durchlaufenden quaderförmigen Gegenstands automatisch jeweils ein rechnerauswertbares Abbild erzeugt, insgesamt also sechs Abbilder,
- durch automatische Bildauswertung des entsprechenden Abbilds für jede Oberfläche des Gegenstands und für jedes vorgegebene optisch erfassbare Merkmal automatisch ermittelt wird, welchen Wert das Merkmal für diese Oberfläche annimmt, so dass insgesamt sechs Registrierungs-Merkmalswerte-Vektoren für den quaderförmigen Gegenstand erzeugt werden, und
- ein Datensatz für den Gegenstand erzeugt und in einem Datenspeicher abgespeichert wird, wobei der Datensatz die sechs Registrierungs-Merkmalswerte-Vektoren umfasst.

4. Verfahren nach einem der Ansprüche 1 bis 3, **dadurch gekennzeichnet, dass** zu den vorgegebenen optisch erfassbaren Merkmalen mindestens eines der folgenden Merkmale gehört:
- ein Farbwert oder Grauwert der Oberfläche,
- die Kontur derjenigen Oberfläche des Gegenstands, die im Abbild gezeigt wird,
- Lage, Größe, Orientierung, Farbwert oder Grauwert von einem Bereich der Oberfläche, der sich optisch von der restlichen Oberfläche unterscheidet,
- das Reflexionsverhalten oder die Oberflächenbeschaffenheit der Oberfläche.

5. Verfahren nach einem der Ansprüche 1 bis 4, **dadurch gekennzeichnet, dass**
- jeder Datensatz für einen zu transportierenden Gegenstand eine Codierung desjenigen Zielpunkts umfasst, an den dieser Gegenstand zu transportieren ist, und
- die generierte Nachricht über diesen Gegenstand eine Kennzeichnung desjenigen Zielpunkts, an den dieser Gegenstand zu transportieren ist, umfasst,
- wobei diese Kennzeichnung aus der Zielpunkt-Codierung in dem Datensatz generiert wird.

6. Verfahren nach einem der Ansprüche 3 bis 5, **dadurch gekennzeichnet, dass**
- die Bildaufnahmestation zu einer ortsfesten Sortieranlage gehört,
- diese Sortieranlage die zu transportierenden Gegenstände abhängig von ihren Zielpunkten sortiert,
- das mindestens eine Abbild von einem Gegenstand zur Erzeugung eines Identifizierungs-Merkmalswerte-Vektors mittels eines mobilen datenverarbeitenden Geräts erzeugt wird.

7. Verfahren nach Anspruch 6, **dadurch gekennzeichnet, dass**
- das mobile datenverarbeitende Gerät einen Datenspeicher umfasst;
- das mindestens eine Abbild von einem Gegenstand zur Erzeugung eines Identifizierungs-Merkmalswerte-Vektors in einem Laderaum eines Auslieferungsfahrzeugs erzeugt wird, und
- jeder Registrierungs-Merkmalswerte-Vektor für einen Gegenstand, der in den Laderaum des Fahrzeugs verbracht wird, an das mobile Gerät übermittelt und im Datenspeicher des mobilen Geräts abgespeichert wird.

8. Verfahren nach einem der Ansprüche 1 bis 7, **dadurch gekennzeichnet, dass**
- das mindestens eine Abbild zur Erzeugung eines Identifizierungs-Merkmalswerte-Vektors in einem Laderaum eines Auslieferungsfahrzeugs erzeugt wird,
- mindestens einmal gemessen wird, an welchem geographischen Ort sich das Fahrzeug aktuell befindet,
- die zur erzeugten Nachricht gehörende Information über den Gegenstand eine Entnahme-Information darüber umfasst, ob der Gegenstand am aktuellen Ort aus dem Fahrzeug zu entnehmen ist oder nicht, und
- diese Entnahme-Information in einer von einem Menschen wahrnehmbaren Form ausgegeben wird.

9. Verfahren nach einem der Ansprüche 3 bis 8, **dadurch gekennzeichnet, dass** für jeden Gegenstand
- jeweils ein Zielpunkt vorgegeben wird, an den dieser Gegenstand zu transportieren ist,
- die Bildaufnahmestation durch Auswertung der Abbilder vom Gegenstand den vorgegebenen Zielpunkt ermittelt,
- eine Codierung des ermittelten Zielpunkts im Datensatz für diesen Gegenstand abgespeichert wird und
- die erzeugte Nachricht über diesen Gegenstand eine Kennzeichnung dieses abgespeicherten Zielpunkts umfasst.

10. Verfahren nach einem der Ansprüche 1 bis 9, **dadurch gekennzeichnet, dass**
- Abbilder von Gegenständen zur Erzeugung von Identifizierungs-Merkmalswerte-Vektoren von einem mobilen Gerät in einem Laderaum eines Auslieferungsfahrzeugs erzeugt werden,
- die Abbilder vom mobilen Gerät an eine räumlich vom mobilen Gerät getrennte Bildauswerteeinheit übermittelt werden,
- die Bildauswerteeinheit die Schritte durchführt,
- die Identifizierungs-Merkmalswerte-Vektoren zu erzeugen und
- diese Identifizierungs-Merkmalswerte-Vektoren mit abgespeicherten Registrierungs-Merkmalswerte-Vektoren zu vergleichen,
- die Bildauswerteeinheit eine Nachricht erzeugt,
- diese erzeugte Nachricht an das mobile Gerät übermittelt wird und
- die Nachricht mit der Information über den Gegenstand unter Verwendung der übermittelten Nachricht von der Bildauswerteeinheit generiert wird.

11. Verfahren nach einem der Ansprüche 1 bis 10, **dadurch gekennzeichnet, dass**
- das mindestens eine Abbild zur Erzeugung eines Identifizierungs-Merkmalswerte-Vektors in einem Laderaum eines Auslieferungsfahrzeugs erzeugt wird,
- während des Transports mindestens einmal mindestens ein Gegenstand aus dem Laderaum entnommen wird und
- der Identifizierungs-Merkmalswerte-Vektor von einem Gegenstand im Laderaum ausschließlich mit Registrierungs-Merkmalswerte-Vektoren von solchen Gegenständen verglichen wird, die sich zum Zeitpunkt dieses Vergleichs noch im Laderaum befinden.

12. Verfahren nach einem der Ansprüche 1 bis 11, **dadurch gekennzeichnet, dass** jeder zu transportierende Gegenstand zunächst in einen Zwischenspeicher und von dort in einen Laderaum eines Auslieferungsfahrzeugs verbracht wird, wobei das mindestens eine Abbild zur Erzeugung eines Identifizierungs-Merkmalswerte-Vektors in einem Laderaum eines Auslieferungsfahrzeugs erzeugt wird und wobei die zum Vergleich herangezogenen Registrierungs-Merkmalswerte-Vektoren zu Datensätzen von mehreren Gegenständen gehören, welche in den Laderaum verbracht wurden, und dass für mindestens einen zu transportierenden Gegenstand im Zwischenspeicher zusätzlich die Schritte durchgeführt werden, dass
- zusätzlich mindestens einmal mindestens ein weiteres rechnerauswertbares Abbild vom Gegenstand erzeugt wird, während sich dieser Gegenstand im Zwischenspeicher befindet,
- durch automatische Bildauswertung des Abbilds vom Gegenstand im Zwischenspeicher ein weiterer Identifizierungs-Merkmalswerte-Vektor erzeugt wird,
- dieser weitere Identifizierungs-Merkmalswerte-Vektor mit abgespeicherten Registrierungs-Merkmalswerte-Vektoren verglichen wird,
- wobei diese abgespeicherten und zum Vergleich herangezogenen Registrierungs-Merkmalswerte-Vektoren zu Datensätzen von Gegenständen gehören, die sich im Zwischenspeicher befinden,
- dann, wenn der Identifizierungs-Merkmalswerte-Vektor mit einem abgespeicherten Registrierungs-Merkmalswerte-Vektor hinreichend genau übereinstimmt, eine weitere Nachricht generiert wird, wobei diese weitere Nachricht eine Information über denjenigen Gegenstand umfasst, zu dem der Datensatz mit dem abgespeicherten und als übereinstimmend erkannten Registrierungs-Merkmalswerte-Vektor gehört, und wobei die weitere Nachricht zum Beladen des Laderaums des Auslieferungsfahrzeugs verwendbar ist.

13. Verfahren nach einem der Ansprüche 1 bis 12, **dadurch gekennzeichnet, dass** die abgespeicherten Registrierungs-Merkmalswerte-Vektoren mindestens einer der folgenden Bedingungen genügen:
- sie umfassen nur Registrierungs-Merkmalswerte-Vektoren für Gegenstände, die planmäßig in ein Fahrzeug oder ein Zwischenlager verbracht wurden;
- sie umfassen nur Registrierungs-Merkmalswerte-Vektoren für Gegenstände, die laut einer Nutzereingabe in ein Fahrzeug oder ein Zwischenlager verbracht wurden;
- sie umfassen nur Registrierungs-Merkmalswerte-Vektoren für Gegenstände, die planmäßig auf einer von einem Fahrzeug abzufahrenden Route und auf mindestens einer benachbarten Route ausgeliefert werden sollen;
- sie werden jeweils um Registrierungs-Merkmalswerte-Vektoren für die Gegenstände reduziert, die basierend auf einer Nutzereingabe endgültig aus einem Fahrzeug oder einem Zwischenlager entfernt wurden;
- jeder gespeicherter Registrierungs-Merkmalswerte-Vektoren ist mit einer gespeicherten Angabe verknüpft, in welchem Fahrzeug oder Zwischenlager sich ein zugehöriger Gegenstand planmäßig befindet, wobei für den Vergleich nur gespeicherte Registrierungs-Merkmalswerte-Vektoren für Gegenstände berücksichtigt werden, die sich planmäßig in dem Fahrzeug oder Zwischenlager befinden;
- jeder gespeicherter Registrierungs-Merkmalswerte-Vektoren ist mit einer gespeicherten Angabe verknüpft, auf welcher Route ein zugehöriger Gegenstand planmäßig ausgeliefert werden soll, wobei für den Vergleich nur gespeicherte Registrierungs-Merkmalswerte-Vektoren für Gegenstände berücksichtigt werden, die planmäßig auf einer vorgegebenen Route oder auf einer benachbarten Route ausgeliefert werden sollen;
- jeder gespeicherter Registrierungs-Merkmalswerte-Vektoren ist mit einer gespeicherten Angabe verknüpfbar, dass der zugehörige Gegenstand endgültig aus einem Fahrzeug oder einem Zwischenlager entfernt wurde, wobei für den Vergleich nur gespeicherte Registrierungs-Merkmalswerte-Vektoren für Gegenstände berücksichtigt werden, die nicht mit einer solchen Angabe verknüpft sind; und
- jeder gespeicherter Registrierungs-Merkmalswerte-Vektoren ist mit einer gespeicherten Angabe verknüpft, an welchem Zielort der zugehörige Gegenstand planmäßig ausgeliefert werden soll, wobei für den Vergleich nur gespeicherte Registrierungs-Merkmalswerte-Vektoren für Gegenstände berücksichtigt werden, die gemäß der gespeicherten Angabe in einem vorgegebenen Umkreis um eine aktuelle Position eines Fahrzeugs und/oder um eine geplante Route eines Fahrzeugs ausgeliefert werden sollen.

14. Anordnung zum Steuern eines Verfahrens zum Transportieren von mehreren quaderförmigen Gegenständen zu vorgegebenen Zielpunkten, wobei die Anordnung folgendes umfasst:
- ein Bildaufnahmegerät, das ausgestaltet ist, von einem zu transportierenden Gegenstand mindestens einmal mindestens ein rechnerauswertbares Abbild zu erzeugen,
- eine Identifizierungs-Bildauswerteeinheit, die dazu ausgestaltet ist, durch automatische Bildauswertung eines Abbilds von einem Gegenstand für mindestens eines von mehreren vorgegebenen optischen Merkmalen zu ermitteln, welchen Wert dieses Merkmal für dieses Abbild vom Gegenstand annimmt, und einen durch automatische Bildauswertung eines Abbilds von einem Gegenstand erzeugten Identifizierungs-Merkmalswerte-Vektor automatisch mit abgespeicherten Merkmalswerte-Vektoren zu vergleichen, wobei diese abgespeicherten und zum Vergleich herangezogenen Registrierungs-Merkmalswerte-Vektoren zu Datensätzen von Gegenständen gehören, wobei ein Datensatz für einen jeweiligen Gegenstand sechs Registrierungs-Merkmalswerte-Vektoren umfasst und wobei jeder der sechs Registrierungs-Merkmalswerte-Vektoren für jeweils eine von sechs Oberflächen des Gegenstands einen Wert für jedes vorgegebene optisch erfassbare Merkmal angibt, und
- ein Nachrichten-Erzeugungs-Gerät, das dazu ausgestaltet ist, dann, wenn der Identifizierungs-Merkmalswerte-Vektor mit einem abgespeicherten Registrierungs-Merkmalswerte-Vektor hinreichend genau übereinstimmt, eine Nachricht zu generieren, die eine Information über denjenigen Gegenstand umfasst, zu dem der Datensatz mit den abgespeicherten und als übereinstimmend erkannten Registrierungs-Merkmalswerte-Vektor gehört.

15. Anordnung gemäß Anspruch 14, wobei das Bildaufnahmegerät ausgestaltet ist, von einem zu transportierenden Gegenstand mindestens einmal mindestens ein rechnerauswertbares Abbild zu erzeugen,
- während sich der Gegenstand in einem Laderaum eines Auslieferungsfahrzeugs befindet, wobei die zum Vergleich herangezogenen Registrierungs-Merkmalswerte-Vektoren zu Datensätzen von mehreren Gegenständen gehören, welche in den Laderaum verbracht wurden, oder
- während sich der Gegenstand in einem Zwischenspeicher befindet, wobei die zum Vergleich herangezogenen Registrierungs-Merkmalswerte-Vektoren zu Datensätzen von mehreren Gegenständen gehören, welche sich in dem Zwischenspeicher befinden.

16. Anordnung gemäß Anspruch 14 oder 15, wobei die Anordnung ferner folgendes umfasst:
- eine Bildaufnahmestation, die jeder zu transportierende Gegenstand während des Transports mindestens einmal durchläuft und die dazu ausgestaltet ist, von jeder Oberfläche jedes zu transportierenden quaderförmigen Gegenstands automatisch jeweils ein rechnerauswertbares Abbild zu erzeugen, insgesamt also sechs Abbilder von einem Gegenstand, und
- eine mit der Bildaufnahmestation verbundene Registrierungs-Bildauswerteeinheit, die dazu ausgestaltet ist, durch automatische Bildauswertung des entsprechenden Abbilds für jede Oberfläche eines zu transportierenden Gegenstands und für jedes vorgegebene optisch erfassbare Merkmal automatisch zu ermitteln, welchen Wert das Merkmal für diese Oberfläche annimmt, sodass insgesamt sechs Registrierungs-Merkmalswerte-Vektoren für einen quaderförmigen Gegenstand erzeugt werden, und die weiterhin dazu ausgestaltet ist, für einen zu transportierenden Gegenstand einen Datensatz zu erzeugen und in einem Datenspeicher abzuspeichern, wobei dieser Datensatz die sechs Registrierungs-Merkmalswerte-Vektoren umfasst.

17. Vorrichtung, die zumindest einen Prozessor und zumindest einen Speicher umfasst, wobei in dem Speicher ein Programm gespeichert ist, und wobei der Speicher und das Programm eingerichtet sind, um, mit dem Prozessor, die Vorrichtung zumindest zu veranlassen, die folgenden Aktionen auszuführen, wenn das Programm auf dem Prozessor ausgeführt wird:
- Empfangen von Bilddaten mindestens eines erzeugten Abbilds eines quaderförmigen Gegenstands;
- Erstellen eines Identifizierungs-Merkmalswerte-Vektors aus mindestens einem Wert mindestens eines Merkmals anhand der Bilddaten, wobei das mindestens eine Merkmal eine optisch erfassbare Eigenschaft einer Oberfläche eines quaderförmigen Gegenstands repräsentiert;
- Vergleichen des erstellten Identifizierungs-Merkmalswerte-Vektors mit gespeicherten Registrierungs-Merkmalswerte-Vektoren, wobei Registrierungs-Merkmalswerte-Vektoren für eine Mehrzahl von quaderförmigen Gegenständen gespeichert sind und wobei für jeden quaderförmigen Gegenstand jeweils ein Registrierungs-Merkmalswerte-Vektoren für jede von sechs verschiedenen Oberflächen des quaderförmigen Gegenstands gespeichert ist; und
- zumindest wenn in dem Vergleich ein gespeicherter Registrierungs-Merkmalswerte-Vektor mit einem vorgegebenen Maß an Übereinstimmung zu dem erstellten Identifizierungs-Merkmalswerte-Vektor gefunden wird, Veranlassen einer Ausgabe einer Nachricht basierend auf einer mit dem gefundenen Registrierungs-Merkmalswerte-Vektor verknüpften, gespeicherten Angabe, wobei die Nachricht für den weiteren Transport des Gegenstandes verwendbar ist.

18. Programm umfassend Programmanweisungen, wobei die Programmanweisungen bei Ausführung durch einen Prozessor eine Vorrichtung zur Ausführung der folgenden Aktionen veranlassen:
- Empfangen von Bilddaten mindestens eines erzeugten Abbilds eines quaderförmigen Gegenstands;
- Erstellen eines Identifizierungs-Merkmalswerte-Vektors aus mindestens einem Wert mindestens eines Merkmals anhand der Bilddaten, wobei das mindestens eine Merkmal eine optisch erfassbare Eigenschaft einer Oberfläche eines quaderförmigen Gegenstands repräsentiert;
- Vergleichen des erstellten Identifizierungs-Merkmalswerte-Vektors mit gespeicherten Registrierungs-Merkmalswerte-Vektoren, wobei Registrierungs-Merkmalswerte-Vektoren für eine Mehrzahl von quaderförmigen Gegenständen gespeichert sind und wobei für jeden quaderförmigen Gegenstand jeweils ein Registrierungs-Merkmalswerte-Vektoren für jede von sechs verschiedenen Oberflächen des quaderförmigen Gegenstands gespeichert ist; und
- zumindest wenn in dem Vergleich ein gespeicherter Registrierungs-Merkmalswerte-Vektor mit einem vorgegebenen Maß an Übereinstimmung zu dem erstellten Identifizierungs-Merkmalswerte-Vektor gefunden wird, Veranlassen einer Ausgabe einer Nachricht basierend auf einer mit dem gefundenen Registrierungs-Merkmalswerte-Vektor verknüpften, gespeicherten Angabe, wobei die Nachricht für den weiteren Transport des Gegenstandes verwendbar ist.

19. Computerlesbares Speichermedium, das ein Programmanweisungen umfassendes Programm speichert, wobei die Programmanweisungen bei Ausführung durch einen Prozessor eine Vorrichtung zur Ausführung der folgenden Aktionen veranlassen:
- Empfangen von Bilddaten mindestens eines erzeugten Abbilds eines quaderförmigen Gegenstands;
- Erstellen eines Identifizierungs-Merkmalswerte-Vektors aus mindestens einem Wert mindestens eines Merkmals anhand der Bilddaten, wobei das mindestens eine Merkmal eine optisch erfassbare Eigenschaft einer Oberfläche eines quaderförmigen Gegenstands repräsentiert;
- Vergleichen des erstellten Identifizierungs-Merkmalswerte-Vektors mit gespeicherten Registrierungs-Merkmalswerte-Vektoren, wobei Registrierungs-Merkmalswerte-Vektoren für eine Mehrzahl von quaderförmigen Gegenständen gespeichert sind und wobei für jeden quaderförmigen Gegenstand jeweils ein Registrierungs-Merkmalswerte-Vektoren für jede von sechs verschiedenen Oberflächen des quaderförmigen Gegenstands gespeichert ist; und
- zumindest wenn in dem Vergleich ein gespeicherter Registrierungs-Merkmalswerte-Vektor mit einem vorgegebenen Maß an Übereinstimmung zu dem erstellten Identifizierungs-Merkmalswerte-Vektor gefunden wird, Veranlassen einer Ausgabe einer Nachricht basierend auf einer mit dem gefundenen Registrierungs-Merkmalswerte-Vektor verknüpften, gespeicherten Angabe, wobei die Nachricht für den weiteren Transport des Gegenstandes verwendbar ist.

## Claims

1. Method for transporting a number of rectangular objects to predetermined destinations, wherein for at least one object to be transported
- at least one computer-evaluable image of the object to be transported is generated, wherein this image shows at least one surface of the object,
- it is determined, by automatic image evaluation of this image for at least one of a number of predetermined optically detectable characteristics, which value this characteristic assumes for this image of the object,
- the identification characteristic values vector generated by image evaluation of the image of the object is automatically compared with stored registration characteristic values vectors, wherein these stored registration characteristic values vectors used for comparison purposes belong to data records of a number of objects, wherein a data record for a respective object comprises six registration characteristic values vectors and wherein each of the six registration characteristic values vectors for each one of six surfaces of the object specifies a value for each predetermined optically detectable characteristic, and
- then, if the identification characteristic values vector corresponds with a stored registration characteristic values vector sufficiently accurately, a message is generated, wherein this message comprises an item of information relating to the object to which the data record with the stored registration characteristic values vector, which is identified as corresponding therewith, belongs, and wherein the message can be used for the further transportation of this object.

2. Method according to claim 1, embodied in a storage space of a delivery vehicle, wherein the registration characteristic values vectors used for comparison purposes belong to data records of a number of objects, which were placed into the storage space, or embodied in a temporary storage, wherein the registration characteristic values vectors used for comparison purposes belong to data records of a number of objects, which are located in the temporary storage.

3. Method according to claim 1 or 2, **characterised in that** prior to this each object to be transported during the transportation passes at least once through an image recording station, wherein the steps are implemented for each object to be transported **in that**,
- the image recording station of each surface of the passing rectangular object automatically generates a computer-evaluable image in each case, in other words a total of six images,
- by automatic image evaluation of the corresponding image for each surface of the object and for each predetermined optically detectable characteristic, it is automatically determined which value the characteristic assumes for this surface, so that in total six registration characteristic values vectors are generated for the rectangular object, and
- a data record for the object is generated and stored in a data memory, wherein the data record comprises the six registration characteristic values vectors.

4. Method according to one of claims 1 to 3, **characterised in that** at least one of the following characteristics belongs to the predetermined optically detectable characteristics:
- a colour value or grey value of the surface,
- the contour of the surface of the object, which is shown in the image,
- the position, size, orientation, colour value or grey value of an area of the surface which differs optically from the remaining surface,
- the reflection behavior or the surface quality of the surface.

5. Method according to one of claims 1 to 4, **characterised in that**
- each data record for an object to be transported comprises an encoding of the destination to which this object is to be transported, and
- the generated message relating to this object comprises an identifier of the destination to which this object is to be transported,
- wherein this identifier is generated from the destination encoding in the data record.

6. Method according to one of claims 3 to 5, **characterised in that**
- the image recording station belongs to a stationary sorting facility,
- this sorting facility sorts the objects to be transported as a function of their destinations,
- the at least one image of an object is generated for generating an identification characteristic values vector by means of a mobile data-processing device.

7. Method according to claim 6, **characterised in that**
- the mobile data-processing device comprises a data memory;
- the at least one image of an object is generated for generating an identification characteristic values vector in a storage space of a delivery vehicle, and
- each registration characteristic values vector for an object, which is placed in the storage space of the vehicle, is transferred to the mobile device and stored in the data memory of the mobile device.

8. Method according to one of claims 1 to 7, **characterised in that**
- the at least one image is generated for generating an identification characteristic values vector in a storage space of a delivery vehicle,
- the geographical location at which the vehicle is currently located is measured at least once,
- the information relating to the object which belongs to the generated message comprises an item of issuing information to determine whether or not the object at the current location is to be removed from the vehicle, and
- this item of issuing information is output in a form which can be perceived by a human.

9. Method according to one of claims 3 to 8, **characterised in that** for each object
- a destination to which this object is to be transported is predetermined in each case,
- the image recording station determines the predetermined time instant by evaluating the images of the object,
- an encoding of the determined time instant is stored in the data record for this object and
- the generated message relating to this object comprises an identifier of this stored time instant.

10. Method according to one of claims 1 to 9, **characterised in that**
- images of objects for generating identification characteristic values vectors are generated from a mobile device in a storage space of a delivery vehicle,
- the images are transferred from the mobile device to an image evaluation unit which is spatially separated from the mobile device,
- the image evaluation unit implements the steps,
- the identification characteristic values vectors are to be generated and
- these identification characteristic values vectors are to be compared with stored registration characteristic values vectors,
- the image evaluation unit generates a message,
- this generated message is transferred to the mobile device and
- the message with the information relating to the object is generated using the transferred message by the image evaluation unit.

11. Method according to one of claims 1 to 10, **characterised in that**
- the at least one image is generated for generating an identification characteristic values vector in a storage space of a delivery vehicle,
- during the transportation at least one object is removed from the storage space at least once and
- the identification characteristic values vector of an object in the storage space is compared exclusively with registration characteristic values vectors of such objects, which are still in the storage space at the time instant of this comparison.

12. Method according to one of claims 1 to 11, **characterised in that** each object to be transported is firstly placed in an intermediate storage and from there into a storage space of a delivery vehicle, wherein the at least one image for generating an identification characteristic values vector is generated in a storage space of a delivery vehicle, and wherein the registration characteristic values vectors used for comparison purposes belong to data records of a number of objects, which were placed in the storage space and that for at least one object to be transported in the temporary storage the steps are additionally implemented that
- at least one further computer-evaluable image of the object is additionally generated at least once, while this object is located in the temporary storage,
- a further identification characteristic values vector is generated by automatic image evaluation of the image of the object in the temporary storage,
- this further identification characteristic values vector is compared with stored registration characteristic values vectors,
- wherein these stored registration characteristic values vectors used for comparison purposes belong to data records of objects, which are located in the temporary storage,
- then if the identification characteristic values vector corresponds with a stored registration characteristic values vector sufficiently accurately, a further message is generated, wherein this further message comprises an item of information relating to the object to which the data record with the stored registration characteristic values vector, which is identified as corresponding therewith, belongs, and wherein the further message can be used to load the storage space of the delivery vehicle.

13. Method according to one of claims 1 to 12, **characterised in that** the stored registration characteristic values vectors satisfy at least one of the following conditions:
- they only comprise registration characteristic values vectors for objects which are placed systematically into a vehicle or an intermediate storage facility;
- they only comprise registration characteristic values vectors for objects which were placed into a vehicle or intermediate storage facility as per a user entry;
- they only comprise registration characteristic values vectors for objects which are to be provided systematically on a route to be traveled by a vehicle and on at least one adjacent route;
- they are reduced in each case by registration characteristic values vectors for the objects which, on the basis of a user entry, were finally removed from a vehicle or an intermediate storage facility;
- each stored registration characteristic values vector is linked with a stored specification, in terms of in which vehicle or intermediate storage facility an associated object is systematically located, wherein for comparison purposes only stored registration characteristic values vectors for objects are taken into account, which objects are located systematically in the vehicle or intermediate storage facility;
- each stored registration characteristic values vector is linked with a stored specification, in terms of on which route an associated object is to be systematically provided, wherein for comparison purposes only stored registration characteristic values vectors are taken into account for objects which are to be provided systemically on a predetermined route or on an adjacent route;
- each stored registration characteristic values vector can be linked with a stored specification that the associated object was finally removed from a vehicle or an intermediate storage facility, wherein for comparison purposes only stored registration characteristic values vectors are taken into account for objects which are not linked with such a specification; and
- each stored registration characteristic values vector is linked with a stored specification, in terms of at which target location the associated object is to be provided systematically, wherein for comparison purposes only stored registration characteristic values vectors are taken into account for objects which, in accordance with the stored specification, are to be provided in a predetermined periphery about a current position of a vehicle and/or about a planned route of a vehicle.

14. Arrangement for controlling a method for transporting a number of rectangular objects to predetermined destinations, wherein the arrangement comprises the following:
- an image recording device, which is embodied to generate at least one computer-evaluable image at least once of an object to be transported,
- an identification image evaluation unit, which is embodied to determine, by automatic image evaluation of an image of an object, for at least one of a number of predetermined optical characteristics, which value this characteristic assumes for this image of the object and to automatically compare an identification characteristic values vector generated by automatic image evaluation of an image of an object with stored characteristic values vectors, wherein these stored registration characteristic values vectors used for comparison purposes belong to data records of objects, wherein a data record for a respective object comprises six registration characteristic values vectors and wherein each of the six registration characteristic values vectors for each one of six surfaces of the object specifies a value for each predetermined optically detectable characteristic, and
- a message generation device, which is embodied, then, if the identification characteristic values vector corresponds sufficiently accurately with a stored registration characteristic values vector, to generate a message which comprises an item of information relating to the object, to which the data record with the stored registration characteristic values vector, which is identified as corresponding therewith, belongs.

15. Arrangement according to claim 14, wherein the image recording device is embodied to generate at least one computer-evaluable image at least once of an object to be transported,
- during which the object is located in a storage space of a delivery vehicle, wherein the registration characteristic values vectors used for comparison purposes belong to data records of a number of objects, which were placed in the storage space, or
- during which the object is located in an intermediate storage facility, wherein the registration characteristic values vectors used for comparison purposes belong to data records of a number of objects, which are located in the temporary storage.

16. Arrangement according to claim 14 or 15, wherein the arrangement also comprises the following:
- an image recording station, through which during transportation each object to be transported passes at least once, and which is embodied to automatically generate a computer-evaluable image of each surface of each rectangular object to be transported in each case, in other words a total of six images of an object, and
- a registration image evaluation unit connected to the image recording station, which is embodied to automatically determine, by automatic image evaluation of the corresponding image for each surface of an object to be transported and for each predetermined optically detectable characteristic, which value the characteristic assumes for this surface, so that in total six registration characteristic values vectors are generated for one rectangular object, and which is also embodied to generate a data record for an object to be transported and to be stored in a data memory, wherein this data record comprises the six registration characteristic values vectors.

17. Device, which comprises at least one processor and at least one memory, wherein a program is stored in the memory, and wherein the memory and the program are configured, in order, with the processor, at least to trigger the apparatus to perform the following actions if the program is run on the processor:
- Receive image data of at least one generated image of a rectangular object;
- Create an identification characteristic values vector from at least one value of at least one characteristic on the basis of the image data, wherein the at least one characteristic represents an optically detectable property of a surface of a rectangular object;
- Compare the created identification characteristic values vector with stored registration characteristic values vectors, wherein registration characteristic values vectors are stored for a plurality of rectangular objects and wherein for each rectangular object a registration characteristic values vector is stored in each case for each of six different surfaces of the rectangular object; and
- at least if in the comparison a stored registration characteristic values vector is found with a predetermined degree of correspondence with the created identification characteristic values vector, trigger an output of a message on the basis of a stored specification linked with the registration characteristic values vector found, wherein the message can be used for the further transportation of the object.

18. Program comprising program instructions, wherein, when run by a processor, the program instructions trigger an apparatus to perform the following actions:
- Receive image data of at least one generated image of a rectangular object;
- Create an identification characteristic values vector from at least one value of at least one characteristic on the basis of the image data, wherein the at least one characteristic represents an optically detectable property of a surface of a rectangular object;
- Compare the created identification characteristic values vector with stored registration characteristic values vectors, wherein registration characteristic values vectors are stored for a plurality of rectangular objects and wherein for each rectangular object a registration characteristic values vector is stored in each case for each of six different surfaces of the rectangular object; and
- at least if in the comparison a stored registration characteristic values vector is found with a predetermined degree of correspondence with the created identification characteristic values vector, trigger an output of a message on the basis of a stored specification linked with the registration characteristic values vector found, wherein the message can be used for the further transportation of the object.

19. Computer-readable storage medium, which stores a program comprising program instructions, wherein the program instructions, when run by a processor, trigger an apparatus to perform the following actions:
- Receive image data of at least one generated image of a rectangular object;
- Create an identification characteristic values vector from at least one value of at least one characteristic on the basis of the image data, wherein the at least one characteristic represents an optically detectable property of a surface of a rectangular object;
- Compare the created identification characteristic values vector with stored registration characteristic values vectors, wherein registration characteristic values vectors are stored for a plurality of rectangular objects and wherein for each rectangular object a registration characteristic values vector is stored in each case for each of six different surfaces of the rectangular object; and
- at least if in the comparison a stored registration characteristic values vector is found with a predetermined degree of correspondence with the created identification characteristic values vector, trigger an output of a message on the basis of a stored specification linked with the registration characteristic values vector found, wherein the message can be used for the further transportation of the object.

## Revendications

1. Procédé de transport de plusieurs objets parallélépipédiques vers des destinations prédéfinies, selon lequel, pour au moins un objet à transporter,
- on génère au moins une image susceptible d'être analysée par ordinateur de l'objet à transporter, cette image montrant au moins une surface de l'objet,
- en soumettant cette image à une analyse d'image automatique, on détermine, pour au moins une parmi plusieurs caractéristiques prédéfinies pouvant être détectées optiquement, la valeur que cette caractéristique prend pour cette image de l'objet,
- le vecteur des valeurs caractéristiques d'identification, généré par ladite analyse d'image de l'image de l'objet, est automatiquement comparé avec des vecteurs de valeurs caractéristiques d'enregistrement mémorisés, ces vecteurs de valeurs caractéristiques d'enregistrement mémorisés et utilisés pour la comparaison appartenant à des jeux de données de plusieurs objets, sachant qu'un jeu de données pour un objet respectif comprend six vecteurs de valeurs caractéristiques d'enregistrement et chacun des six vecteurs de valeurs caractéristiques d'enregistrement indique, pour une des six surfaces de l'objet, une valeur pour chaque caractéristique prédéfinie pouvant être détectée optiquement, et
- si le vecteur de valeurs caractéristiques d'identification montre une concordance suffisamment précise avec un vecteur de valeurs caractéristiques d'enregistrement mémorisé, un message est généré, ce message comprenant une information sur l'objet auquel appartient le jeu de données comportant le vecteur de valeurs caractéristiques d'enregistrement mémorisé et reconnu comme concordant, et ledit message pouvant être utilisé pour le transport ultérieur de cet objet.

2. Procédé selon la revendication 1, qui est mis en oeuvre dans un espace de chargement d'un véhicule de livraison, les vecteurs de valeurs caractéristiques d'enregistrement utilisés pour la comparaison appartenant à des jeux de données de plusieurs objets ayant été mis dans l'espace de chargement, ou qui est mis en oeuvre dans un entrepôt temporaire, les vecteurs de valeurs caractéristiques d'enregistrement utilisés pour la comparaison appartenant à des jeux de données de plusieurs objets se trouvant dans l'entrepôt temporaire.

3. Procédé selon la revendication 1 ou 2, **caractérisé en ce que** chaque objet à transporter passe pendant le transport au préalable au moins une fois par un poste de prise d'image, pour chaque objet à transporter étant effectuées les étapes consistant **en ce que**
- le poste de prise d'image génère automatiquement une image susceptible d'être analysée par ordinateur de chaque surface de l'objet parallélépipédique passant dans ledit poste, soit au total six images,
- pour chaque surface de l'objet et pour chaque caractéristique prédéfinie détectable optiquement est déterminée, par analyse d'image automatique de l'image correspondante, la valeur que cette caractéristique prend pour cette surface, de sorte que, au total, six vecteurs de valeurs caractéristiques d'enregistrement sont générés pour l'objet parallélépipédique, et
- un jeu de données est généré pour l'objet et enregistré dans une mémoire de données, le jeu de données comprenant les six vecteurs des valeurs caractéristiques d'enregistrement.

4. Procédé selon l'une des revendications 1 à 3, **caractérisé en ce qu'**au moins une des caractéristiques suivantes fait partie des caractéristiques prédéfinies pouvant être détectées optiquement :
- une valeur de couleur ou une valeur de gris de la surface,
- le contour de la surface de l'objet montrée sur l'image,
- la position, taille, orientation, valeur de couleur ou valeur de gris d'une partie de la surface se distinguant optiquement du reste de la surface,
- le comportement réfléchissant ou l'état de la surface.

5. Procédé selon l'une des revendications 1 à 4, **caractérisé en ce que**
- chaque jeu de données pour un objet à transporter comprend un codage de la destination vers laquelle cet objet doit être transporté, et
- le message généré concernant cet objet comprend une identification de la destination vers laquelle l'objet doit être transporté,
- cette identification étant générée à partir du codage de la destination contenu dans le jeu de données.

6. Procédé selon l'une des revendications 3 à 5, **caractérisé en ce que**
- le poste de prise d'image fait partie d'une installation de tri fixe,
- cette installation de tri classe les objets à transporter en fonction de leurs destinations,
- la au moins une image d'un objet permettant de générer un vecteur des valeurs caractéristiques d'identification est générée au moyen d'un appareil de traitement de données mobile.

7. Procédé selon la revendication 6, **caractérisé en ce que**
- l'appareil de traitement de données mobile comprend une mémoire de données,
- la au moins une image d'un objet permettant de générer un vecteur des valeurs caractéristiques d'identification est générée dans un espace de chargement d'un véhicule de livraison, et
- chaque vecteur de valeurs caractéristiques d'enregistrement pour un objet mis dans l'espace de chargement est transmis à l'appareil mobile et enregistré dans la mémoire de données de l'appareil mobile.

8. Procédé selon l'une des revendications 1 à 7, **caractérisé en ce que**
- la au moins une image permettant de générer un vecteur de valeurs caractéristiques d'identification est générée dans un espace de chargement d'un véhicule de livraison,
- le lieu géographique actuel où se trouve le véhicule est déterminé au moins une fois,
- l'information faisant partie du message généré relative à l'objet comprend une information de retrait sur la question de savoir si l'objet doit être retiré ou non du véhicule au lieu actuel, et
- cette information de retrait est délivrée sous une forme perceptible par un être humain.

9. Procédé selon l'une des revendications 3 à 8, **caractérisé en ce que**, pour chaque objet,
- une destination respective vers laquelle cet objet doit être transporté est prédéfinie,
- le poste de prise d'image détecte la destination prédéfinie en analysant les images de l'objet,
- un codage de la destination détectée est enregistré dans le jeu de données pour cet objet, et
- le message généré relatif à cet objet comprend une identification de cette destination enregistrée.

10. Procédé selon l'une des revendications 1 à 9, **caractérisé en ce que**
- des images permettant de générer des vecteurs de valeurs caractéristiques d'identification sont générées par un appareil mobile dans un espace de chargement d'un véhicule de livraison,
- les images sont transmises par l'appareil mobile à une unité d'analyse d'image séparée dans l'espace de l'appareil mobile,
- l'unité d'analyse d'image effectue les étapes
- de générer les vecteurs des valeurs caractéristiques d'identification et
- de comparer ces vecteurs de valeurs caractéristiques d'identification avec des vecteurs de valeurs caractéristiques d'enregistrement mémorisés,
- l'unité d'analyse d'image génère un message,
- ce message généré est transmis à l'appareil mobile et
- le message contenant l'information sur l'objet est généré par l'unité d'analyse d'image en utilisant le message transmis.

11. Procédé selon l'une des revendications 1 à 10, **caractérisé en ce que**
- la au moins une image permettant de générer un vecteur de valeurs caractéristiques d'identification est générée dans un espace de chargement d'un véhicule de livraison,
- au moins un objet est retiré au moins une fois de l'espace de chargement pendant le transport et
- le vecteur de valeurs caractéristiques d'identification d'un objet dans l'espace de chargement est comparé exclusivement avec des vecteurs de valeurs caractéristiques d'enregistrement d'objets se trouvant encore dans l'espace de chargement au moment de cette comparaison.

12. Procédé selon l'une des revendications 1 à 11, **caractérisé en ce que** chaque objet à transporter est mis d'abord dans un entrepôt temporaire et de là dans un espace de chargement d'un véhicule de livraison, la au moins une image permettant de générer un vecteur de valeurs caractéristiques d'identification étant générée dans un espace de chargement d'un véhicule de livraison et les vecteurs de valeurs caractéristiques d'enregistrement utilisés pour la comparaison appartenant à des jeux de données de plusieurs objets ayant été mis dans l'espace de chargement, et **en ce que**, pour au moins un objet à transporter, sont effectuées dans le magasin temporaire les étapes de
- générer en plus, au moins une fois, au moins une autre image susceptible d'être analysée par ordinateur de l'objet pendant que cet objet se trouve dans le magasin temporaire,
- de générer par analyse d'image automatique de l'image de l'objet dans le magasin temporaire un autre vecteur de valeurs caractéristiques d'identification,
- de comparer cet autre vecteur de valeurs caractéristiques d'identification avec des vecteurs de valeurs caractéristiques d'enregistrement mémorisés,
- ces vecteurs de valeurs caractéristiques d'enregistrement mémorisés et utilisés pour la comparaison appartenant à des jeux de données d'objets se trouvant dans le magasin temporaire,
- de générer un autre message si le vecteur de valeurs caractéristiques d'identification montre une concordance suffisamment précise avec un vecteur de valeurs caractéristiques d'enregistrement mémorisé, ledit autre message comprenant une information sur l'objet auquel appartient le jeu de données comportant le vecteur de valeurs caractéristiques d'enregistrement mémorisé et reconnu comme concordant, et ledit autre message pouvant être utilisé pour charger l'espace de chargement du véhicule de livraison.

13. Procédé selon l'une des revendications 1 à 12, **caractérisé en ce que** les vecteurs de valeurs caractéristiques d'enregistrement mémorisés répondent à au moins une des conditions suivantes .
- ils comprennent uniquement des vecteurs de valeurs caractéristiques d'enregistrement pour des objets ayant été mis dans un véhicule ou un magasin temporaire selon un plan établi ;
- ils comprennent uniquement des vecteurs de valeurs caractéristiques d'enregistrement pour des objets ayant été mis dans un véhicule ou un magasin temporaire selon une entrée utilisateur ;
- ils comprennent uniquement des vecteurs de valeurs caractéristiques d'enregistrement pour des objets devant être livrés selon un plan établi sur un itinéraire à parcourir par un véhicule et sur au moins un itinéraire voisin ;
- ils sont réduits chacun de vecteurs de valeurs caractéristiques d'enregistrement pour des objets ayant été définitivement retirés d'un véhicule ou d'un magasin temporaire sur la base d'une entrée utilisateur ;
- chaque vecteur de valeurs caractéristiques d'enregistrement mémorisé est combiné avec une indication mémorisée qui précise le véhicule ou le magasin temporaire dans lequel un objet associé se trouve selon un plan établi, sachant que pour la comparaison, seuls sont pris en compte les vecteurs de valeurs caractéristiques d'enregistrement mémorisés pour des objets qui se trouvent comme prévu dans le véhicule ou le magasin temporaire ;
- chaque vecteur de valeurs caractéristiques d'enregistrement mémorisé est combiné avec une indication mémorisée qui précise l'itinéraire sur lequel un objet associé doit être livré, sachant que pour la comparaison, seuls sont pris en compte les vecteurs de valeurs caractéristiques d'enregistrement mémorisés pour des objets qui doivent être livrés comme prévu sur un itinéraire prédéfini ou un itinéraire voisin ;
- chaque vecteur de valeurs caractéristiques d'enregistrement mémorisé peut être combiné avec une indication mémorisée qui précise que l'objet associé a été définitivement retiré d'un véhicule ou d'un magasin temporaire, sachant que pour la comparaison, seuls sont pris en compte les vecteurs de valeurs caractéristiques d'enregistrement mémorisés pour des objets, qui ne sont pas combinés avec une telle indication ; et
- chaque vecteur de valeurs caractéristiques d'enregistrement mémorisé est combiné avec une indication mémorisée qui précise la destination où l'objet associé doit être livré comme prévu, sachant que pour la comparaison, seuls sont pris en compte les vecteurs de valeurs caractéristiques d'enregistrement mémorisés pour des objets qui selon l'indication mémorisée doivent être livrés dans un périmètre prédéfini autour d'une position actuelle d'un véhicule et/ou d'un itinéraire planifié d'un véhicule.

14. Agencement pour commander un procédé de transport de plusieurs objets parallélépipédiques vers des destinations prédéfinies, ledit agencement comprenant :
- un appareil de prise d'image, conçu pour générer au moins une fois, au moins une image susceptible d'être analysée par ordinateur d'un objet à transporter,
- une unité d'analyse d'image, conçue pour déterminer par analyse d'image automatique d'une image d'un objet, pour au moins une parmi plusieurs caractéristiques optiques prédéfinies, la valeur que cette caractéristique prend pour cette image de l'objet, et pour comparer automatiquement un vecteur de valeurs caractéristiques d'identification généré automatiquement par ladite analyse d'une image d'un objet avec des vecteurs de valeurs caractéristiques d'enregistrement mémorisés, ces vecteurs de valeurs caractéristiques d'enregistrement mémorisés et utilisés pour la comparaison appartenant à des jeux de données d'objets, sachant qu'un jeu de données pour un objet respectif comprend six vecteurs de valeurs caractéristiques d'enregistrement et chacun des six vecteurs de valeurs caractéristiques d'enregistrement indique, pour une des six surfaces de l'objet, une valeur pour chaque caractéristique prédéfinie détectable optiquement, et
- un appareil générateur de messages, conçu pour générer un message si le vecteur de valeurs caractéristiques d'identification montre une concordance suffisamment précise avec un vecteur de valeurs caractéristiques d'enregistrement mémorisé, lequel message comprend une information sur l'objet auquel appartient le jeu de données comportant le vecteur de valeurs caractéristiques d'enregistrement mémorisé et reconnu comme concordant.

15. Agencement selon la revendication 14, l'appareil de prise d'image étant conçu pour générer au moins une fois au moins une image susceptible d'être analysé par ordinateur d'un objet à transporter,
- pendant que l'objet se trouve dans un espace de chargement d'un véhicule de livraison, les vecteurs de valeurs caractéristiques d'enregistrement utilisés pour la comparaison appartenant à des jeux de données de plusieurs objets ayant été mis dans l'espace de chargement, ou
- pendant que l'objet se trouve dans un magasin temporaire, les vecteurs de valeurs caractéristiques d'enregistrement utilisés pour la comparaison appartenant à des jeux de données de plusieurs objets se trouvant dans le magasin temporaire.

16. Agencement selon la revendication 14 ou 15, ledit agencement comprenant en outre :
- un poste de prise d'image par lequel chaque objet à transporter passe pendant le transport au moins une fois et qui est conçu pour générer automatiquement une image susceptible d'être analysée par ordinateur de chaque surface de chaque objet parallélépipédique, soit au total six images, et
- une unité d'analyse d'image d'enregistrement reliée au poste de prise d'image, qui est conçue pour déterminer par analyse d'image automatique de l'image correspondante, pour chaque surface d'un objet à transporter et pour chaque caractéristique prédéfinie détectable optiquement, la valeur que la caractéristique prend pour cette image, de sorte que, au total, six vecteurs de valeurs caractéristiques d'enregistrement sont générés pour un objet parallélépipédique, et qui est conçue en outre pour générer et enregistrer dans une mémoire de données un jeu de données pour un objet à transporter, ce jeu de données comprenant les six vecteurs de valeurs caractéristiques d'enregistrement.

17. Dispositif qui comprend un processeur et au moins une mémoire, dans la mémoire étant stocké un programme, et la mémoire et le programme étant conçus pour au moins demander au dispositif, à l'aide du processeur, d'effectuer les actions suivantes lorsque le programme est exécuté sur le processeur :
- recevoir des données d'image d'au moins une image générée d'un objet parallélépipédique ;
- construire à l'aide desdites données d'image un vecteur de valeurs caractéristiques d'identification à partir d'au moins une valeur d'au moins une caractéristique, ladite au moins une caractéristique représentant une propriété détectable optiquement d'une surface d'un objet parallélépipédique ;
- comparer ledit vecteur de valeurs caractéristiques d'identification construit avec des vecteurs de valeurs caractéristiques d'enregistrement stockés, des vecteurs de valeurs caractéristiques d'enregistrement étant stockés pour une pluralité d'objets parallélépipédiques, et pour chaque objet parallélépipédique un vecteur de valeurs caractéristiques d'enregistrement étant mémorisé pour chacune des six surfaces différentes de l'objet parallélépipédique ; et
- au moins lorsqu'un vecteur de valeurs caractéristiques d'enregistrement mémorisé ayant un niveau de concordance prédéfini avec le vecteur de valeurs caractéristiques d'identification est trouvé dans la comparaison, demander de délivrer un message sur la base d'une indication mémorisée et combinée avec le vecteur de valeurs caractéristiques d'enregistrement trouvé, ledit message étant utilisable pour le transport ultérieur de l'objet.

18. Programme comprenant des instructions de programme, lesdites instructions de programme, lorsqu'elles sont exécutées par un processeur, demandent à un dispositif d'exécuter les actions suivantes :
- recevoir des données d'image d'au moins une image générée d'un objet parallélépipédique ;
- construire à l'aide desdites données d'image un vecteur de valeurs caractéristiques d'identification à partir d'au moins une valeur d'au moins une caractéristique, ladite au moins une caractéristique représentant une propriété détectable optiquement d'une surface d'un objet parallélépipédique ;
- comparer ledit vecteur de valeurs caractéristiques d'identification construit avec des vecteurs de valeurs caractéristiques d'enregistrement mémorisés, des vecteurs de valeurs caractéristiques d'enregistrement étant mémorisés pour une pluralité d'objets parallélépipédiques, et pour chaque objet parallélépipédique un vecteur de valeurs caractéristiques d'enregistrement étant mémorisé pour chacune des six surfaces différentes de l'objet parallélépipédique ; et
- au moins lorsqu'un vecteur de valeurs caractéristiques d'enregistrement mémorisé ayant un niveau de concordance prédéfini avec le vecteur de valeurs caractéristiques d'identification est trouvé dans la comparaison, demander de délivrer un message sur la base d'une indication mémorisée et combinée avec le vecteur de valeurs caractéristiques d'enregistrement trouvé, ledit message étant utilisable pour le transport ultérieur de l'objet.

19. Support de stockage lisible par ordinateur, qui stocke un programme comprenant des instructions de programme, lesdites instructions de programme, lorsqu'elles sont exécutées par un processeur, demandent à un dispositif d'exécuter les actions suivantes :
- recevoir des données d'image d'au moins une image générée d'un objet parallélépipédique ;
- construire à l'aide desdites données d'image un vecteur de valeurs caractéristiques d'identification à partir d'au moins une valeur d'au moins une caractéristique, ladite au moins une caractéristique représentant une propriété détectable optiquement d'une surface d'un objet parallélépipédique ;
- comparer ledit vecteur de valeurs caractéristiques d'identification construit avec des vecteurs de valeurs caractéristiques d'enregistrement mémorisés, des vecteurs de valeurs caractéristiques d'enregistrement étant mémorisés pour une pluralité d'objets parallélépipédiques, et pour chaque objet parallélépipédique un vecteur de valeurs caractéristiques d'enregistrement étant mémorisé pour chacune des six surfaces différentes de l'objet parallélépipédique ; et
- au moins lorsqu'un vecteur de valeurs caractéristiques d'enregistrement mémorisé ayant un niveau de concordance prédéfini avec le vecteur de valeurs caractéristiques d'identification est trouvé dans la comparaison, demander de délivrer un message sur la base d'une indication mémorisée et combinée avec le vecteur de valeurs caractéristiques d'enregistrement trouvé, ledit message étant utilisable pour le transport ultérieur de l'objet.
